# EUROPEAN PATENT APPLICATION

(11) **EP 4 092 060 A1**
(43) Date of publication of application: **23.11.2022**
(21) Application number: 21305665.8
(22) Date of filing: 20.05.2021
(51) Int. Cl.: C08F 230/02, C09D 4/06, C09J 4/06, C08F 130/02, C09D 4/00, C09J 4/00

(54) **POLYMERIZABLE FLAME RETARDANT**

(71) Applicant: ARKEMA FRANCE, 92700 Colombes (FR)
(72) Inventor: FAN, Mingxin, GUANGZHOU, 511455 (CN); XIONG, Li, GUANGZHOU, 511455 (CN)
(74) Representative: Leca, François Michel

(57) **Abstract**

The present invention relates to non-halogenated and non-metal polymerizable flame retardants, their preparation, compositions containing the same and uses thereof. These flame retardants may be polymerized with other ethylenically unsaturated compounds and chemically bound to the resin matrix thus limiting their migration out of the finished product. The flame retardants of the invention are also more environmentally friendly than conventional halogen-based or metal-based flame retardants.

## Description

### FIELD OF THE INVENTION

The present invention relates to non-halogenated and non-metal polymerizable flame retardants, their preparation, compositions containing the same and uses thereof. These flame retardants may be polymerized with other ethylenically unsaturated compounds and chemically bound to the resin matrix thus limiting their migration out of the finished product. The flame retardants of the invention are also more environmentally friendly than conventional halogen-based or metal-based flame retardants.

### TECHNICAL BACKGROUND

Electrical and electronics are becoming part of daily life, many appliances and electronic devices are used in our work and personal activities. These devices are becoming smaller, more compact and more efficient but they also generate more heat and fire hazards. This risk can be mitigated by incorporating flame retardants in coatings and adhesives. Flame retardants can, for example, act by causing rapid extinguishing of flames, or by making the product difficult to set afire. However, most flame retardants are based on halogen or metals which are harmful to the environment and to human life.

In order to replace halogen-based or metal-based flame retardants, phosphorus-containing compounds have also been developed. For example, US 6,329,451 discloses flame retardant plastic resin composition using surface coated and stabilized red phosphorus. US 6,822,025 discloses flame retardant resin composition comprising organophosphate additives.

US 9,714,340 discloses flame retardant polyphenylene ether resin comprising an organophosphate additive.

However, these phosphorus-containing flame retardants are basically non-reactive additives, which might migrate and/or volatilize from the cured product over time, causing a reduction in the flame retardant performance. It would therefore be desirable to provide phosphorus-based flame retardants containing at least one (meth)acrylate group. The (meth)acrylated flame retardant of the invention may advatageoulsy be combined with ethylenically unsaturated compounds, such as (meth)acrylate monomers and/or oligomers, without any compatibility issues and fully integrated in the cured polymeric matrix after exposure to radiation, such as UV, near-UV and/or visible radiation. Such compounds are particularly useful in the manufacture of radiation curable formulations with flame retardant properties and a reduced amount of extractables. Further, the incorporation of these compounds does not impair the curing of the composition nor the final properties of the cured product.

### SUMMARY OF THE INVENTION

A first object of the present is a polymerizable flame retardant comprising:
- one or two (meth)acrylate-containing moieties; and
- one phosphorus-containing moiety comprising more than one phosphorus atom; and
- optionally one or more urethane or ester bonds.

Another object of the present invention is a process of preparing a polymerizable flame retardant, wherein the polymerizable flame retardant is the reaction product of at least one phosphorus-containing compound, at least one (meth)acrylate-containing alcohol and at least one compound selected from a diisocyanate, a diisocyanate derivative, a diacid, a diester and a cyclic anhydride. In particular, the polymerizable flame retardant is the reaction product of at least one phosphorus-containing compound, at least one (meth)acrylate-containing alcohol and at least one diisocyanate or diisocyanate derivative.

Another object of the present invention is a polymerizable composition comprising:
a) a polymerizable flame retardant according to the invention or prepared according to the process of the invention;
b) an ethylenically unsaturated compound other than a).

Another object of the present invention is the use of the polymerizable flame retardant according to the invention or prepared according to the process of the invention, in a radiation curable composition, in particular in a UV or LED-curable composition.

Another object of the present invention is the use of the polymerizable flame retardant according to the invention or prepared according to the process of the invention, obtain a cured product with improved flame resistance and/or improved heat resistance and/or reduced amount of extractables.

Another object of the present invention is a substrate on which the polymerizable composition according to the invention has been applied, in particular the substrate is cellulosic material, wool, fur, silk, leather, metal, natural and/or synthetic stone, ceramic, glass, brick, concrete, drywall, roofing shingles, asphalt, fiberglass, mineral wool, thermoplastic material, thermosetting material, polymer composite and combinations thereof.

### DETAILED DESCRIPTION

### Definitions

In the present application, the term "comprise(s) a/an" means "comprise(s) one or more".

Unless mentioned otherwise, the % by weight in a compound or a composition are expressed based on the weight of the compound, respectively of the composition.

As used herein, the term "flame retardant", "flame resistant", "heat retardant" and "heat resistant" and the like refers to the ability to withstand flame or heat without igniting.

The term « aryl » means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). Examples include phenyl, naphtyl, biphenyl, phenanthrenyl and naphthacenyl.

The term « alkyl » means a monovalent saturated alicyclic hydrocarbon group of formula -CₙH₂ₙ₊₁ wherein n is 1 to 20. An alkyl may be linear or branched. A C1-C12 alkyl refers to an alkyl having 1 to 12 carbon atoms. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like.

The term « halogen » means an atom selected from Cl, Br, F and I.

The term « cycloalkyl » means a monovalent saturated alicyclic hydrocarbon group comprising a cycle. Examples of cycloalkyl groups include cyclopentyl, cyclohexyl and isobornyl.

The term « heterocycloalkyl » means a cycloalkyl having at least one ring atom that is a heteroatom selected from O, N or S.

The term « alkoxy » means a group of formula -O-alkyl, wherein the alkyl is as defined above. A C1-C12 alkoxy refers to an alkoxy group having 1 to 12 carbon atoms.

The term « aryloxy » means a group of formula -O-aryl, wherein the aryl is as defined above.

The term « alkylaryl » means an alkyl substituted by an aryl group. An example of an alkylaryl group is benzyl (-CH₂-Phenyl).

The term « alkylaryloxy » means a group of formula -O-alkylaryl, wherein the alkylaryl is as defined above.

The term « heteroaryl » means an aryl having at least one ring atom that is a heteroatom selected from O, N or S.

The term « linker » means a plurivalent group. A linker may connect at least two moieties of a compound together, in particular 2 to 6 moieties of a compound together. For example, a linker that connects two moieties of a compound together is referred to as a divalent linker, a linker that connects three moieties of a compound together is referred to as a trivalent linker, etc... The term « (a+1)valent linker » means a linker having a valency equal to a+1, i.e a linker that connects a+1 moieties of a compound together .

The term « hydrocarbon linker » means a linker having a carbon backbone chain which may optionally be interrupted by one or more heteroatoms selected from N, O, S, Si and mixtures thereof. A hydrocarbon linker may be aliphatic, cycloaliphatic or aromatic. A hydrocarbon linker may be saturated or unsaturated. A hydrocarbon linker may be optionally substituted.

The term « aliphatic compound » or « aliphatic linker » means a compound, respectively a linker, that is non-aromatic. It may be linear or branched, saturated or unsaturated, cyclic or acyclic. It may be substituted by one or more groups, for example selected from alkyl, hydroxyl, halogen (Br, Cl, I), carbonyl, amine, carboxylic acid, -C(=O)-OR', -C(=O)-O-C(=O)-R', each R' being independently a C1-C6 alkyl. It may comprise one or more bonds selected from ether, ester, amide, urethane, urea and mixtures thereof.

The term « cycloaliphatic compound » or « cycloaliphatic linker » means a compound, respectively a linker, comprising a non-aromatic ring. The non-aromatic ring may have only carbon atoms as the ring atoms (i.e. a cyclohexyl) or it may comprise carbon atoms and one or more heteroatoms selected from N, O and S as ring atoms (i.e. an hetercycloalkyl). It may be saturated or unsaturated. It may be substituted by one or more groups as defined for aliphatic compounds and linkers. It may comprise one or more bonds as defined as defined for aliphatic compounds and linkers.

The term « aromatic compound » or« aromatic linker » means a compound, respectively a linker, comprising an aromatic ring (i.e. a ring that respects Hückel's aromaticity rule).The aromatic ring may have only carbon atoms as the ring atoms (i.e. a phenyl) or it may comprise carbon atoms and one or more heteroatoms selected from N, O and S as ring atoms (i.e. an heteroaryl). It may be substituted by one or more groups as defined for aliphatic compounds and linkers. It may comprise one or more bonds as defined as defined for aliphatic compounds and linkers. Araliphatic compounds and linkers (ie. compounds and linkers comprising both an aromatic moiety and an aliphatic moiety) are encompassed by aromatic compounds and linkers.

The term « saturated » means a compound or linker that does not comprise any double or triple carbon-carbon bonds.

The term « unsaturated » means a compound or linker that comprises a double or triple carbon-carbon bond, in particular a double carbon-carbon bond.

The term « polyol » means a compound comprising at least two hydroxyl groups.

The term « polyether polyol » or « polyether linker » means a polyol, respectively a linker, comprising at least two ether bonds.

The term « polyester polyol » or « polyester linker » means a polyol, respectively a linker, comprising at least two ester bonds.

The term « polycarbonate polyol » or « polycarbonate linker » means a polyol, respectively a linker, comprising at least two carbonate bonds.

The term « polyurethane linker » means a linker comprising at least two urethane bonds.

The term « polyorganosiloxane polyol » or « polyorganosiloxane linker » means a polyol, respectively a linker, comprising at least two organosiloxane bonds. The organosiloxane may, for example be a dimethylsiloxane bond.

The term « polycaprolactone polyol » or « polycaprolactone linker » means a polyol, respectively a linker, comprising at least two units derived from the ring-opening polymerization of ε-caprolactone, in particular at least two -[(CH₂)₅-C(=O)O]- units.

The term « polybutadiene polyol » or « polybutadiene linker » means a polyol, respectively a linker, comprising at least two units derived from the polymerization of butadiene, in particular at least two units selected from -CH₂-CH=CH-CH₂- and CH₂-CH(CH=CH₂)-.

The term « isocyanurate linker » means a linker comprising an isocyanurate moiety, in particular a moiety of formula:

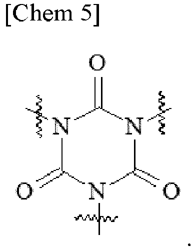

The term « alkylene » means a linker derived from an alkane of formula CₘH₂ₘ₊₂ (m may be from 1 to 100) by removing one hydrogen atom at each point of attachment of the linker.

The term « alkyleneoxyalkylene » means an alkylene interrupted by one oxygen atom. Examples of suitable alkyleneoxyalkylenes are ethyleneoxyethylene (-CH₂-CH₂-O-CH₂-CH₂-), propyleneoxypropylene (-CH₂-CH(CH₃)-O-CH₂-CH(CH₃)- or -CH(CH₃)-CH₂-O-CH(CH₃)-CH₂-) and butyleneoxybutylene (-CH₂-CH₂-CH₂-CH₂-O-CH₂-CH₂-CH₂-CH₂-)

The term « poly(alkyleneoxyalkylene) » means an alkylene interrupted by more than one oxygen atoms.

The term « alkoxylated compound » or « alkoxylated linker » means a compound, respectively a linker, containing one or more oxyalkylene moieties (-O-(CHR")ₐ₃- wherein R" is H or methyl and a3 is 1 to 10, preferably 2 to 4), in particular one or more oxyalkylene moieties selected from oxyethylene (-O-CH₂-CH₂-), oxypropylene (-O-CH₂-CH(CH₃)- or -O-CH(CH₃)-CH₂-), oxybutylene (-O-CH₂-CH₂-CH₂-CH₂-) and combinations thereof. For example, an alkoxylated compound or linker may contain from 1 to 30 oxyalkylene moieties.

The term « arylene » means a linker derived from an arene by removing one hydrogen atom at each point of attachment of the linker.

The term « alkylarylene » means a linker comprising an alkylene moiety and an arylene moeiy.

The term « optionally substituted » means a compound, group or linker that is optionally substituted by one or more groups selected from alkyl, cycloalkyl, aryl, heteroaryl, alkoxy, alkylaryl, hydroxyl, halogen, nitrile, amine, amide, carboxylic acid, oxo (=O), -C(=O)-R'-C(=O)-OR', -C(=O)NH-R', -NH-C(=O)R', -O-C(=O)-NH-R', -NH-C(=O)-O-R', - C(=O)-O-C(=O)-R' and -SO₂-NH-R', each R' being independently an optionally substituted group selected from alkyl, aryl and alkylaryl.

As used herein, a composition that is "substantially free of compound X" means a composition comprising less than 5%, less than 2%, less than 1%, less than 0.5%, less than 0.2%, less than 0.1%, less than 0.05%, less than 0.02%, less than 0.01% or even 0% by weight of compound X based on the weight of the composition.

### Polymerizable flame retardant

### (Meth)acrylate-containing moielies

The polymerizable flame retardant of the invention comprises one or two (meth)acrylate-containing moieties. In particular, the polymerizable flame retardant of the invention comprises two (meth)acrylate-containing moieties, which may be identical or different.

A (meth)acrylate-containing moiety means a moiety containing at least one (meth)acrylate group corresponding to the following formula 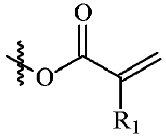 wherein R₁ is H or methyl.

Each (meth)acrylate-containing moiety may independently bear 1 to 6 (meth)acrylate groups, in particular 1 to 3 (meth)acrylate groups, more particularly 1 (meth)acrylate group.

In particular, all of the (meth)acrylate groups of the polymerizable flame retardant are contained in the one or two (meth)acrylate-containing moieties. Consequently, the phosphorus-containing moiety may not bear any (meth)acrylate groups.

The total number of (meth)acrylate groups in the flame retardant of the invention may be from 1 to 12, in particular from 1 to 6, more particularly from 1 to 4, even more particularly 1 or 2, more particularly still 2.

Each (meth)acrylate-containing moiety may independently comprise a moiety corresponding to formula (Ia): 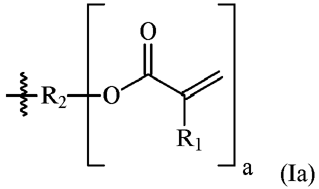 wherein
R₁ is H or methyl;
R₂ is a (a+1)valent linker;
a is 1 to 6; in particular 1 or 2, more particularly 1.

In particular, each (meth)acrylate-containing moiety may independently comprise a moiety corresponding to formula (Ib) 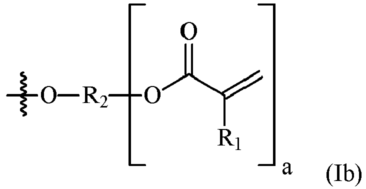 wherein R₁, R₂ and a are as defined above.

R₂ is a (a+1)valent linker. In particular, R₂ may be a divalent linker (a=1), a trivalent linker (a=2), a tetravalent linker (a=3), a pentavalent linker (a=4), a hexavalent linker (a=5) or a heptavalent linker (a=6). More particularly, R₂ may be a divalent, trivalent or tetravalent linker. Even more particularly, R₂ may be a divalent linker.

R₂ may be (a+1)valent linker selected from an aliphatic or aromatic hydrocarbon linker, a polyether linker, a polyester linker, a polycarbonate linker, a polyurethane linker, a polyorganosiloxane linker, a polycaprolactone linker, a polybutadiene linker, an isocyanurate linker, and combinations thereof. In particular, R₂ may be selected from an aliphatic or aromatic hydrocarbon linker, a polyether linker, a polyester linker and combinations thereof. Even more particularly, R₂ may be selected from an alkylene, an alkoxylated linker and a polyester linker.

R₂ may be the residue of a polyol P_{OH} without the OH groups. Examples of suitable polyols P_{OH} include ethylene glycol, 1,2- or 1,3-propylene glycol, 1,2-, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, cyclohexane-1,4-dimethanol, norbornene dimethanol, norbornane dimethanol, tricyclodecanediol, tricyclodecane dimethanol, bisphenol A, B, F or S, hydrogenated bisphenol A, B, F or S, trimethylolmethane, trimethylolethane, trimethylolpropane, di(trimethylolpropane), triethylolpropane, pentaerythritol, di(pentaerythritol), glycerol, di-, tri- or tetraglycerol, polyglycerol, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), a sugar alcohol, a dianhydrohexitol (i.e. isosorbide, isomannide, isoidide), tris(2-hydroxyethyl)isocyanurate, a polybutadiene polyol, a polyester polyol, a polyether polyol, a polyorganosiloxane polyol, a polycarbonate polyol as well as the alkoxylated (e.g., ethoxylated and/or propoxylated) derivatives thereof and the derivatives obtained by ring-opening polymerization of ε-caprolactone initiated with one of the aforementioned polyols.

R₂ may be a divalent, trivalent, tetravalent, pentavalent, hexavalent or heptavalent polyester linker corresponding to the residue of a polyester polyol without the OH groups. A polyester polyol is obtained by reacting one or more polyhydroxyl functional compounds (in particular a polyhydroxyl functional compound comprising 2 to 4 hydroxy groups) with one or more polycarboxylic acid functional compounds or derivatives thereof (in particular dicarboxylic acids and cyclic anhydrides). The polyhydroxyl functional compound(s) and polycarboxylic acid functional compound(s) can each have linear, branched, cycloaliphatic or aromatic structures and can be used individually or as mixtures. Examples of suitable polyhydroxyl functional compounds are the same as those defined for polyol P_{OH} above. Examples of suitable polycarboxylic acids include adipic acid, succinic acid, oxalic acid, malonic acid, pimelic acid, suberic acid, sebacic acid, dodecanedioic acid, eicosanedioic acid, cyclohexane dicarboxylic acid, hexahydrophthalic acid, itaconic acid, fumaric acid, maleic acid and the like. Aromatic diacids such as phthalic acid and terephthalic acid could also be utilized. Examples of suitable anhydrides include succinic anhydride, hexahydrophthalic anhydride, maleic anhydride, fumaric anhydride, tetrahydrophthalic anhydride, phthalic anhydride. Derivatives of polycarboxylic acids are compounds that are able to transform in polycarboxylic acid by hydrolysis or transesterification. Suitable examples include dimethylmalonate, diethylmalonate, dimethyladipate, dimethyl glutarate and dimethyl succinate.

R₂ may be a trivalent linker corresponding to the following formula (II): 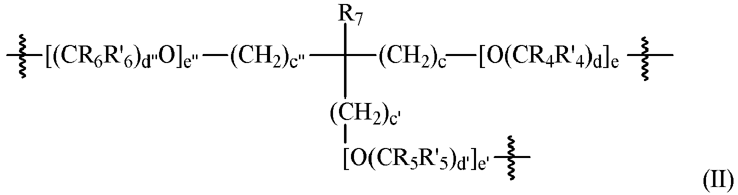 wherein
R₄, R'₄, R₅, R'₅, R₆ and R'₆ are independently H or methyl;
R₇ is selected from H, alkyl and alkoxy, in particular R₇ is alkyl;
c, c' and c" are independently 0 to 2 with the proviso that at least 2 among c, c' and c" are not 0, in particular c, c' and c" are all 1 or c is 0 and c' and c" are 1;
d, d' and d" are independently 2 to 4, in particular 2;
e, e' and e" are independently 0 to 10, in particular 1 to 6.

R₂ may be a trivalent linker corresponding to the following formula (III): 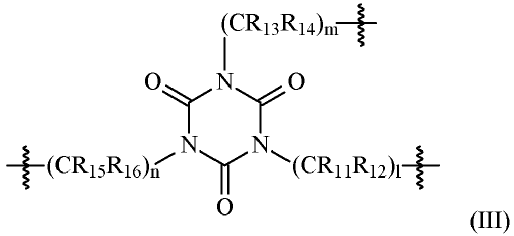 wherein
R₁₁, R₁₂, R₁₃, R₁₄, R₁₅ and R₁₆ are independently H or methyl, in particular H; 1, m and n are independently 1 to 6, in particular 2.

R₂ may be a tetravalent linker corresponding to the following formula (IV): 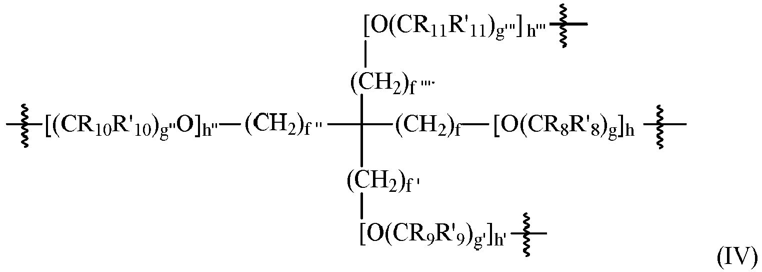 wherein
R₈, R'₈, R₉, R'₉, R₁₀, R'₁₀, R₁₁ and R'₁₁ are independently H or methyl;
f, f', f" and f" are independently 0 to 2 with the proviso that at least 3 among f, f', f" and f''' are not 0, in particular f, f', f" and f''' are all 1,
g, g', g" and g''' are independently 2 to 4, in particular 2;
h, h', h" and h''' are independently 0 to 10, in particular 1 to 6.

R₂ may be a tetravalent linker corresponding to the following formula (V): 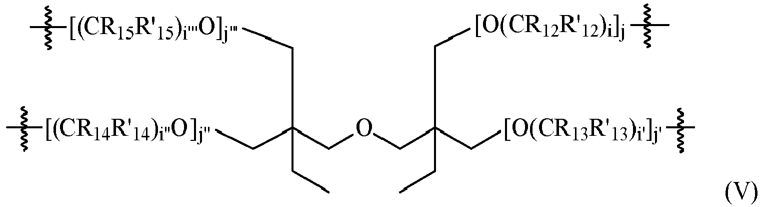 wherein
R₁₂, R'₁₂, R₁₃, R'₁₃, R₁₄, R'₁₄, R₁₅ and R'₁₅ are independently H or methyl;
i, i', i" and i'" are independently 2 to 4, in particular 2;
j, j', j" and j''' are independently 0 to 10, in particular 1 to 6.

R₂ may be a hexavalent linker corresponding to the following formula (VI): 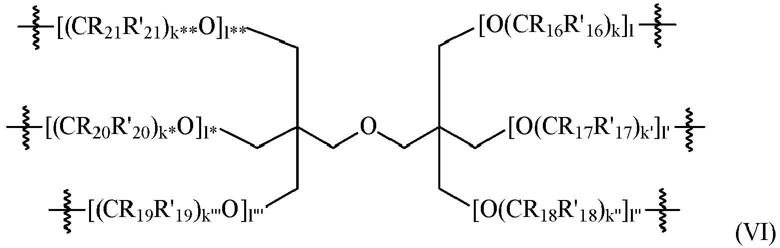 wherein
R₁₆, R'₁₆, R₁₇, R'₁₇, R₁₈, R'₁₈, R₁₉, R'₁₉, R₂₀, R'₂₀, R₂₁ and R'₂₁ are independently H or methyl; k, k', k", k''', k* and k** are independently 2 to 4, in particular 2;
1, 1', 1", 1''', 1* and 1** are independently 0 to 10, in particular 1 to 6.

R₂ may be a divalent linker selected from one of formula (VII) to (XI):

-(CR₂₂R'₂₂)ₘ- (VII)

- [(CR₂₃R'₂₃)ₙ-O]ₒ-(CR₂₃R'₂₃)ₙ- (VIII)

-[(CR₂₄R'₂₄)ₚ-O]_{q}-(CR₂₅R'₂₅)ᵣ-[O-(CR₂₆R'₂₆)ₚ']_{q}'- (IX)

-[(CR₂₇R'₂₇)ₛ-C(=O)O]ᵣ-(CR₂₈R'₂₈)ᵤ-* (X)

-[(CR₂₉R'₂₉)ᵥ-O-C(=O)-(CR₃₀R'₃₀)_{w}-C(=O)-O]ₓ-(CR₂₉R'₂₉)ᵥ- (XI)

wherein
R₂₂, R'₂₂, R₂₅, R'₂₅, R₂₉, R'₂₉, R₃₀ and R'₃₀ are independently H or alkyl;
R₂₃, R'₂₃, R₂₄, R'₂₄, R₂₆, R'₂₆, R₂₇, R'₂₇, R₂₈ and R'₂₈ are independently H or methyl;
m is 2 to 20;
n, p and p' are independently 2 to 4;
o is 1 to 20;
q and q' are independently 0 to 20 with the proviso that at least one of q and q' is not 0 ;
r is 2 to 20;
s is 3 to 12;
t is 1 to 20;
u is 2 to 8;
v is 2 to 20;
w is 2 to 30;
x is 1 to 20;
the symbol * represents the point of attachment to the (meth)acrylate group.

In particular, R₂ may be a divalent linker selected from an alkylene such as 1,2-ethanediyl, 1,2- or 1,3-propanediyl, 1,2-, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-dietbyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated (in particular an ethoxylated and/or propoxylated) derivative of the aforementioned alkylenes; an esterified (in particular by ring-opening polymerization of a lactone such as ε-caprolactone) derivative of the aforementioned alkylenes; a residue of a di-, tri-, tetra- or polyoxyalkylene without the OH groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol); and a residue of a polyester polyol without the OH groups.

### Phosphorus-containing moiety

The polymerizable flame retardant comprises one phosphorus-containing moiety. In particular, the polymerizable flame retardant comprises only one phosphorus-containing moiety.

A phosphorus-containing moiety means a moiety containing phosphorus atoms.

The phosphorus-containing moiety comprises more than one phosphorus atoms. In particular, the phosphorus-containing moiety comprises more than one phosphorus-containing units, each unit comprising a phosphorus atom. The phosphorous-containing units may be identical or different.

In particular, all of the phosphorus atoms of the polymerizable flame retardant are contained in the phosphorus-containing moiety.

Each phosphorus-containing unit may independently comprise a phosphate moiety, a phosphonate moiety or a phosphinate moiety.

A phosphate moiety means a moiety containing a phosphate group. A phosphate group comprises a phosphorus atom bound to four oxygen atoms wherein the phosphorus and oxygen atoms are bound to one another with one P=O double bond and three P-O single bonds.

A phosphonate moiety means a moiety containing a phosphonate group. A phosphonate group comprises a phosphorus atom bound to three oxygen atoms and one carbon atom wherein the phosphorus, oxygen and carbon atoms are bound to one another with one P=O double bond, two P-O single bonds and one P-C single bond.

A phosphinate moiety means a moiety containing a phosphinate group. A phosphinate group comprises a phosphorus atom bound to two oxygen atoms and two carbon atoms wherein the phosphorus, oxygen and carbon atoms are bound to one another with one P=O double bond, two P-O single bonds and two P-C single bonds.

In particular, each phosphorus-containing unit may independently comprise a phosphate moiety or a phosphonate moiety. More particularly, each phosphorus-containing unit may independently comprise a phosphate moiety or a phosphonate moiety corresponding to the following formula (XII): 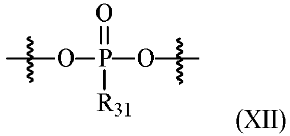 wherein R₃₁ is OH, alkyl, alkoxy, aryl, aryloxy, alkylaryl or alkylaryloxy, preferably alkyl or alkoxy.

When R₃₁ is OH, alkoxy, aryloxy or alkylaryloxy, the moiety of formula (XII) is a phosphate moiety. When R₃₁ is alkyl, aryl or alkylaryl, the moiety of formula (XII) is a phosphonate moiety.

In particular, R₃₁ may be OH, C1-C12 alkyl, C1-C12 alkoxy, an optionally substituted phenyl, phenyloxy, benzyl or benzyloxy. More particularly, R₃₁ may be C1-C4 alkyl or C1-C4 alkoxy.

The phosphorus-containing units of the phosphorus-containing moiety may be connected to one another by a divalent linker.

In particular, the phosphorus-containing moiety may comprise a moiety represented by formula (XIII): 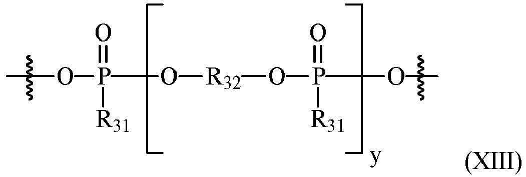 wherein
each R₃₁ is independently as defined above for formula (XII);
each R₃₂ is independently a divalent linker;
y is 1 to 50, preferably 1 to 10.

R₃₂ may be a divalent linker selected from optionally substituted alkylene, optionally substituted alkyleneoxyalkylene, optionally substituted poly(alkyleneoxyalkylene), optionally substituted arylene, an optionally substituted alkylarylene, preferably alkylene, alkyleneoxyalkylene or poly(alkyleneoxyalkylene).

In particular, R₃₂ may be C1-C10 alkylene optionally substituted by one or more phenyl groups, C4-C20 alkyleneoxyalkylene optionally substituted by one or more phenyl groups, C6-C100 poly(alkyleneoxyalkylene) optionally substituted by one or more phenyl groups, phenylene, diphenylene or C7-C20 alkylarylene.

More particularly, R₃₂ may be selected from one of formula (XIV) to (XVIII):

-(CR₃₃R'₃₃)_{m'}- (XVI)

-[(CR₃₄R'₃₄)ₙ'-O]_{o'}-(CR₃₄R'₃₄)ₙ'- (XV)

-Ph- (XVI)

-(CR₃₅R'₃₅)_{p"}-Ph-(CR₃₆R'₃₆)_{q"}- (XVII)

-Ph-(CR₃₇R'₃₇)_{r"}-Ph- (XVIII)

wherein
each R₃₃, R'₃₃, R₃₄ and R'₃₄ is independently selected from H, alkyl and phenyl;
each R₃₅, R'₃₅, R₃₆, R'₃₆, R₃₇ and R'₃₇ is independently selected from H and alkyl;
Ph is an optionally substituted phenylene;
m' is 1 to 10;
n' is 2 to 4;
o' is 1 to 50;
p" and q" are independently 0 to 10 with the proviso that at least one of p" and q" is not 0;
r" is 0 to 10.

Even more particularly, R₃₂ corresponds to formula (XIV) or (XV) as defined above.

The phosphorus-containing moiety may comprise a moiety of formula (XIII) as defined above and oxyalkylene units. In particular, the phosphorus-containing moiety may comprise a moiety represented by the following formula (XIX): 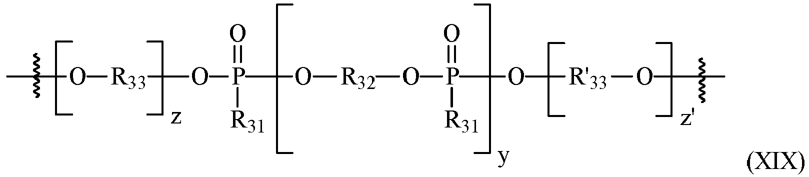 wherein
each R₃₁ is independently as defined above for formula (XII);
each R₃₂ is independently as defined above for formula (XIII);
each R₃₃ and R'₃₃ is independently alkylene, preferably C2-C4 alkylene;
y is as defined above for formula (XIII);
z and z' are independently 0 to 20 with the proviso that at least one of z and z' is not 0, preferably z and z' are independently 1 to 20.

### Urethane and ester bonds

The polymerizable flame retardant of the invention may optionally comprise one or more urethane (-NH-C(=O)-O- or -O-C(=O)-NH-) or ester (-C(=O)-O- or -O-C(=O)-) bonds.

The optional ester bonds are distinct from the (meth)acrylate groups contained in the (meth)acrylate containing moiety.

The atoms in the urethane and esters bonds may be partly contained in a (meth)acrylic-containing moiety or phosphorus-containing moiety and partly contained in a linker.

The polymerizable flame retardant of the invention may comprise at least one linker L connecting a (meth)acrylate-containing moiety to the phosphorus-containing moiety. The linker may thus be positioned between a (meth)acrylate-containing moiety and the phosphorus-containing moiety.

The polymerizable flame retardant of the invention flame retardant may comprise two linkers L, each linker L connecting a (meth)acrylate-containing moiety to one end of the phosphorus-containing moiety.

The linker L may be a bond or a linker corresponding to one of the following formulae (XX) or (XXI): 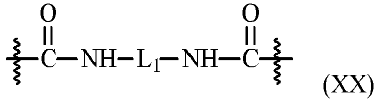 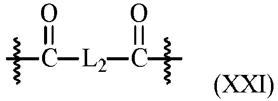 wherein
L₁ is selected from an aliphatic linker, a cycloaliphatic linker, an aromatic linker and an araliphatic linker;
L₂ is selected from an aliphatic linker, a cycloaliphatic linker, an aromatic linker and an araliphatic linker.

In particular, the linker L may correspond to formula (XX).

L₁ may be the residue of a diisocyanate of formula OCN-Li-NCO, without the NCO groups, or a derivative thereof. In particular, the diisocyanate of formula OCN-Li-NCO may be selected from an aliphatic diisocyanate, a cycloaliphatic diisocyanate, an aromatic diisocyanate, an araliphatic diisocyanate or a derivative thereof.

A diisocyanate derivative may be compound that is able to generate a diisocyanate in situ, for example a diisocyanate having blocked NCO groups which can be unblocked (i.e. turned into free NCO groups) under specific conditions such as heating. The diisocyanate derivative may be an oligomerized diisocyanate (i.e. dimer, trimer, tetramer, pentamer, hexamer or higher oligomer) or a modified diisocyanate (i.e. having allophanate, isocyanurate, uretdione, biuret or iminooxadiazinedione structure).

Examples of suitable diisocyanates include 2,4- and 2,6-toluene diisocyanate (TDI), isophorone diisocyanate (IPDI - corresponding to 3-isocyanatomethyl-3,5,5-trimethylcyclohexylisocyanate), tetramethylene diisocyanate, pentamethylene diisocyanate (PDI), hexamethylene diisocyanate (HDI), trimethylhexamethylene diisocyanate (TMDI), 2,2'-, 2,4'- and 4,4'-diphenylmethane diisocyanate (MDI), 2,2'-, 2,4'- and 4,4'-dicyclohexylmethane diisocyanate (H12MDI), 3,3'-dimethyl-4,4'-biphenyl diisocyanate, 1,4-benzene diisocyanate, 1,5-naphtalene diisocyanate (NDI), 1,3- and 1,4-cyclohexane diisocyanate, 1-methyl-2,4-diisocyanatocyclohexane, 1-methyl-2,6-diisocyanatocyclohexane, dodecane diisocyanate, m-tetramethylene xylylene diisocyanate, 4,6-xylylene diisocyanate, and derivatives of the above-mentioned diisocyanates (in particular dimers thereof, trimers thereof, and modified forms of the above-mentioned diisocyanates having an allophanate, isocyanurate, uretdione, biuret or iminooxadiazinedione structure).

In one embodiment, the diisocyanate of formula OCN-Li-NCO or derivative thereof may be an aliphatic diisocyanate, a cycloaliphatic diisocyanate or a derivative thereof, in particular isophorone diisocyanate, hexamethylene diisocyanate or a hexamethylene diisocyanate trimer; more particularly isophorone diisocyanate.

L₂ may be the residue of a residue of a diacid or diester of formula R₃₈OOC-L₂-COOR₃₈, without the COOR₃₈ groups, wherein R₃₈ is H or an alkyl. Alternatively, L₂ may correspond to the moiety of a cyclic anhydride that forms a ring with the -C(=O)-O-C(=O)- group.

In particular, the diacid or diester of formula R₃₈OOC-L₂-COOR₃₈ may be an aliphatic diacid or diester, a cycloaliphatic diacid or diester, an aromatic diacid or diester and an araliphatic diacid or diester; more particularly an aliphatic diacid or diester; even more particularly a saturated or unsaturated aliphatic diacid or diester.

Examples of saturated aliphatic diacids include malonic acid, succinic acid, 2-methylsuccinic acid, 2,2-dimethylsuccinic acid, glutaric acid, 3,3-diethylglutaric acid, adipic acid, pimelic acid, suberic acid, azelaic acid, sebacic acid, dodecanedioic acid.

Examples of unsaturated aliphatic diacids include itaconic acid, maleic acid, fumaric acid, glutaconic acid and muconic acid.

An example of a saturated cycloaliphatic diacid is cyclohexanedicarboxylic acid.

Examples of aromatic diacids are phthalic acid, isophthalic acid, terephthalic acid, naphtalenedicarboxylic acid and 2,5-furandicarboxylic acid.

Suitable examples of diesters are the alkyl esters of the above-mentioned diacids, in particular methyl and/or ethyl esters of the above-mentioned diacids, more particularly dimethyl malonate, diethyl malonate, dimethyl adipate, dimethyl glutarate, dimethyl succinate.

Examples of suitable cyclic anhydrides include succinic anhydride, maleic anhydride, fumaric anhydride, phthalic anhydride, hexahydrophthalic anhydride and tetrahydrophthalic anhydride.

### Structures

The polymerizable flame retardant of the present invention may correspond to one of the structures of formula (XXII) to (XXV):

Y-PHOS-ACR (XXII)

ACR-PHOS-ACR (XXIII)

Y-PHOS-L-ACR (XXIV)

ACR-L-PHOS-L-ACR (XXV)

wherein
ACR is a (meth)acrylate-containing moiety as defined above;
PHOS is a phosphorus-containing moiety as defined above;
L is a linker as defined above;
Y is a terminal group.

Y may be a terminal group that is present on one end of the phosphorus-containing moiety, in particular when the polymerizable flame retardant bears only one (meth)acrylate-containing moiety.

Y may be selected from H, alkyl and aryl. In particular, Y is H or alkyl.

Preferred structures for the polymerizable flame retardant are according to formula (XXIV) or (XXV). The structure of formula (XXV) is particularly preferred.

In particular, the polymerizable flame retardant of the invention may correspond to one of the structures of formula (XXVI)-(XXIX): 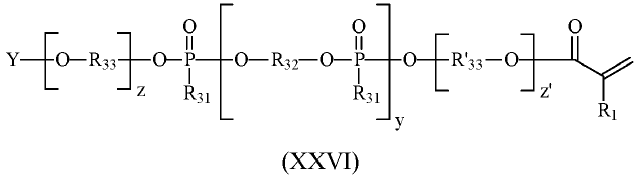 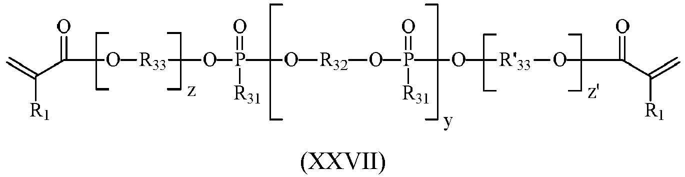 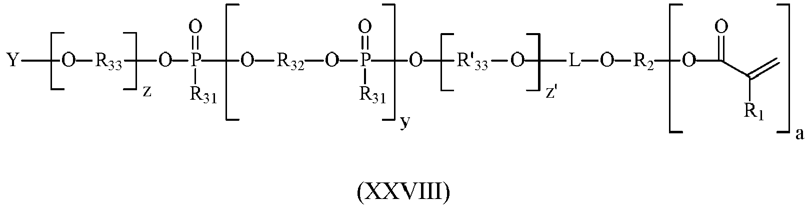 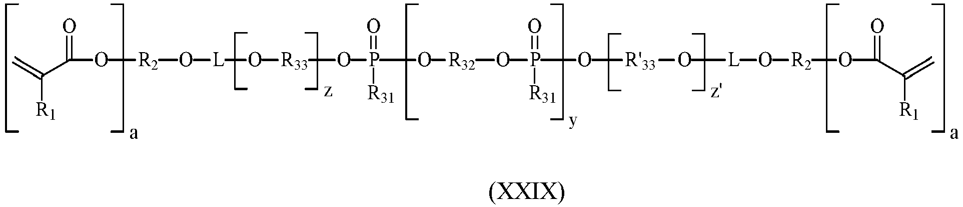 wherein
R₁ R₂, R₃₁, R₃₂, R₃₃, R'₃₃, L, Y, a, y, z and z' are as defined above.

Preferred structures for the polymerizable flame retardant are according to formula (XXVIII) or (XXIX). The structure of formula (XXIX) is particularly preferred.

In particular, the polymerizable flame retardant of the invention may correspond to the structure of formula (XXVIII) or (XXIX), more particularly to the structure of formula (XXIX), wherein
R₁ is H or methyl;
R₂ is a divalent linker, in particular selected from one of formula (VII)-(XI) as defined above; each R₃₁ is independently OH, alkyl, alkoxy, aryl, aryloxy, alkylaryl or alkylaryloxy, in particular C1-C4 alkyl or C1-C4 alkoxy;
each R₃₂ is independently alkylene, alkyleneoxyalkylene, poly(alkyleneoxyalkylene), arylene or alkylarylene, in particular according to one of formula (XIV)-(XVIII) as defined above; each R₃₃ and R'₃₃ is independently alkylene, in particular C2-C4 alkylene;
L is a linker corresponding to formulae (XX) or (XXI) as defined above, in particular L is a linker of formula (XX);
Y is H or alkyl;
a is 1 to 6; in particular 1 or 2;
y is 1 to 50, in particular 1 to 10;
z and z' are independently 0 to 20 with the proviso that at least one of z and z' is not 0, in particular z and z' are independently 1 to 20.

The polymerizable flame retardant of the invention may be prepared according to the process described below.

### Process for the preparation of a polymerizable flame retardant

The polymerizable flame retardant of the invention may be the reaction product of at least one phosphorus-containing compound, at least one (meth)acrylate-containing compound and optionally at least one OH-reactive compound.

The phosphorous-containing compound may be a phosphorous-containing alcohol. In particular, the phosphorous-containing compound may be a phosphorous-containing monoalcohol containing a single OH group or a phosphorous-containing diol containing two OH groups. The phosphorous-containing compound may correspond to formula (XXX) 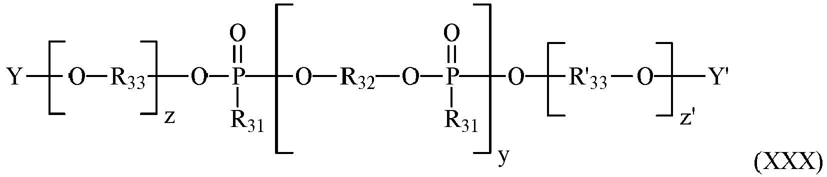
R₃₁, R₃₂, R₃₃, R'₃₃, y, z and z' are as defined above;
Y and Y' are independently selected from H, alkyl and aryl, with the proviso that at least one of Y and Y' is H.

The (meth)acrylate-containing compound may be (meth)acrylic acid or a (meth)acrylate-containing alcohol. The (meth)acrylate-containing compound may correspond to formula (XXXI) or (XXXII) 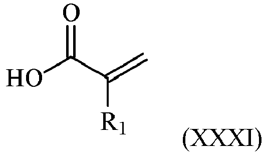 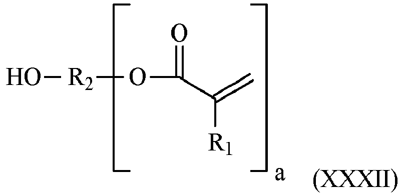 wherein R₁, R₂ and a are as defined above.

The OH-reactive compound may be selected from a diisocyanate, a diisocyanate derivative, a diacid, a diester and a cyclic anhydride. The OH-reactive compound may be selected from a diisocyanate corresponding to formula (XXXIII) or a derivative thereof, a diacid or a diester corresponding to formula (XXXIV) and a cyclic anhydride corresponding to formula (XXXV):

OCN-L₁-NCO (XXXIII)

R₃₄OOC-L₂-COOR₃₄ (XXXIV)

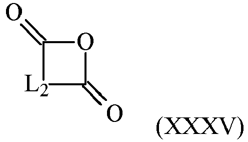

wherein L₁ and L₂ are as defined above;
R₃₄ and R'₃₄ are independently H or alkyl.

Examples of suitable diisocyanates, diisocyanate derivatives, diacids, diesters and cyclic anhydride are as described above.

In a first embodiment, the polymerizable flame retardant of the invention may be the reaction product of at least one phosphorus-containing alcohol and (meth)acrylic acid. The polymerizable compound obtained with the process of the first embodiment may correspond to the structure of formula (XXII), (XXIII), (XXVI) or (XXVII) as defined above.

In a second embodiment, the polymerizable flame retardant of the invention may be the reaction product of at least one phosphorus-containing alcohol, at least one (meth)acrylate-containing alcohol and at least one OH-reactive compound selected from a diisocyanate, a diisocyanate derivative, a diacid, a diester and a cyclic anhydride. The polymerizable compound obtained with the process of the second embodiment may correspond to the structure of formula (XXIV), (XXV), (XXVIII) or (XXIX) as defined above.

The process of the second embodiment may be carried out by reacting the different components in one or more steps. In a first alternative, the process comprises mixing and reacting at least one OH-reactive compound, at least one phosphorus-containing alcohol and at least one (meth)acrylate-containing alcohol all together. In a second alternative, the process comprises the following successive steps: reacting at least one OH-reactive compound with at least one phosphorus-containing alcohol and then adding to the resulting product at least one (meth)acrylate-containing alcohol. In a third alternative, the process comprises the following successive steps: reacting at least one OH-reactive compound with at least one (meth)acrylate-containing alcohol and then adding to the resulting product at least one phosphorus-containing alcohol.

The molar ratio R/OH may be from 0.95 to 1.05. The molar ratio R/OH corresponds to the molar ratio between the OH-reactive groups of the OH-reactive compound and the OH groups of the phosphorus-containing alcohol and the (meth)acrylate-containing alcohol.

The process may be carried out in the presence of a catalyst. The catalyst may be selected from compounds based on Sn, Ti, Zn, Zr, Ba, Bi, Co, Pb, Mn, preferably based on Sn, Bi, Zn, Ti, Zr.

More particularly, the catalyst may be selected from:
- inorganic tin compounds such as stannous octoate, stannous oxalate, stannous stearate, stannous naphthenate or stannous chloride dihydrate;
- organotin compounds such as dibutyltin (DBT) compounds, in particular DBT bis-O-phenylphenate, DBT bis-(2,3-dihydroxypropylmercaptide), DBT bis-(2-hydroxyethylmercaptide), DBT bis-(4-hydroxyphenylmercaptide), dioctyltin bis-(2-hydroxyethylmercaptide), dioctyltin bis-(4-hydroxybutylmercaptide), DBT bis-(4-hydroxyphenylacetate), DBT bis-[3-(4-hydroxyphenyl)propionatel, DBT *S,S*-dibutylthio-carbonate, DBT diacetate, DBT diketanoate, DBT dilaurate, DBT dilauryl mercaptide or DBT malenate; dioctyltin (DOT) compounds, in particular DOT bis-(4-hydroxyphenylacetate), DOT bis-(3-hydroxybutyrate), DOT diacetate, DOT di(ethylhexanoate), DOT dithioglycolate, DOT dilaurate, DOT diketanoate, DOT dicarboxylate or DOT stannoxane; dimethyltin (DMT) compounds, tributyltin (TBT) compounds, trimethyltin (TMT) compounds, triphenyltin (TPhT) compounds, tetrabutyltin (TeBT) compounds, tricyclohexyltin (TCyHT) compounds, trioctyltin (TOT) compounds, tripropyltin (TPT) compounds, monobutyltin (MBT) compounds or monoctyltin (MOT) compounds;
- bismuth compounds such as bismuth carboxylate, bismuth neodecanoate, bismuth stannate or bismuth stearate;
- zinc compounds such as zinc acetate, zinc acetylacetoate, zinc neodecanoate, zinc octoate or zinc oxalate;
- titanium compounds such as titanium acetylacetone complex, titanium ethylacetoacetonate complex, titanium tetrabutanolate or titanium triethanol;
- zirconium compounds such as zirconium ethyl acetoacetonate complex or zirconium octoate;
- some additional organometallic compounds suitable as catalysts such as potassium octoate, potassium neodecanoate, amine complexes, copper oleate, copper naphthenate, cerium octoate, iron acetoacetonate, lead stannate, lead stearate, barium nitride.

### Polymerizable composition

The polymerizable composition of the invention comprises a polymerizable flame retardant, referred to as component a). The polymerizable composition of the invention further comprises an ethylenically unsaturated compound other than a), referred to as component b).

The polymerizable composition of the invention may comprise:
- from 10 to 95%, from 20 to 90%, from 30 to 85%, from 40 to 80%, from 50 to 75% or from 60 to 70% of component a);
- from 5 to 90%, from 10 to 80%, from 15 to 70%, from 20 to 60%, from 25 to 50% or from 30 to 40% of component b);
the % being % by weight based on the total weight of components a) and b).

The polymerizable composition of the invention may further comprise one or more compounds selected from:
- a photoinitiator;
- an amine synergist;
- a flame retardant other than component a);
- an additive;
- a solvent.

### Ethylenically unsaturated compound

The polymerizable composition of the invention comprises an ethylenically unsaturated compound. The polymerizable composition of the invention may comprise a mixture of ethylenically unsaturated compounds.

As used herein, the term "ethylenically unsaturated compound" means a compound that comprises a polymerizable carbon-carbon double bond. A polymerizable carbon-carbon double bond is a carbon-carbon double bond that can react with another carbon-carbon double bond in a polymerization reaction. A polymerizable carbon-carbon double bond is generally comprised in a group selected from acrylate (including cyanoacrylate), methacrylate, acrylamide, methacrylamide, styrene, maleate, fumarate, itaconate, allyl, propenyl, vinyl and combinations thereof, preferably selected from acrylate, methacrylate and vinyl, more preferably selected from acrylate and methacrylate. The carbon-carbon double bonds of a phenyl ring are not considered as polymerizable carbon-carbon double bonds.

In one embodiment, the ethylenically unsaturated compound may be selected from a (meth)acrylate functionalized monomer, a (meth)acrylate functionalized oligomer, an amine-modified acrylate and mixtures thereof. In particular, the ethylenically unsaturated compound comprises a (meth)acrylate functionalized monomer.

The total amount of ethylenically unsaturated compound (including (meth)acrylate functionalized monomer, (meth)acrylate functionalized oligomer and amine-modified acrylate) in the polymerizable composition may be from 1 to 99%, from 2 to 90%, from 5 to 80%, from 10 to 70%, from 15 to 60%, from 20 to 50%, from 25 to 45% or from 30 to 40%, by weight based on the weight of the composition. In particular, the polymerizable composition may comprise from 50 to 99%, from 50 to 95%, from 50 to 90% from 50 to 85%, from 50 to 80% or from 50 to 75% by weight of ethylenically unsaturated compound based on the weight of the composition. Alternatively, the polymerizable composition may comprise from 1 to 50%, from 5 to 50%, from 10 to 50%, from 15 to 50%, from 20 to 50%, from 25 to 50% or from 30 to 50%, by weight of ethylenically unsaturated compound based on the weight of the composition.

As used herein, the term "(meth)acrylate-functionalized monomer" means a monomer comprising a (meth)acrylate group, in particular an acrylate group. The term "(meth)acrylate-functionalized oligomer" means an oligomer comprising a (meth)acrylate group, in particular an acrylate group. The term "(meth)acrylate group" encompasses acrylate groups (-O-CO-CH=CH₂) and methacrylate groups (-O-CO-C(CH₃)=CH₂).

The ethylenically unsaturated compound may comprise a (meth)acrylate-functionalized monomer. The ethylenically unsaturated compound may comprise a mixture of (meth)acrylate-functionalized monomers.

The (meth)acrylate-functionalized monomer may have a molecular weight of less than 600 g/mol, in particular from 100 to 550 g/mol, more particularly 200 to 500 g/mol.

The (meth)acrylate-functionalized monomer may have 1 to 6 (meth)acrylate groups, in particular 1 to 4 (meth)acrylate groups.

The (meth)acrylate-functionalized monomer may comprise a mixture of (meth)acrylate-functionalized monomers having different functionalities. For example the (meth)acrylate-functionalized monomer may comprise a mixture of a (meth)acrylate-functionalized monomer containing a single acrylate or methacrylate group per molecule (referred to herein as "mono(meth)acrylate-functionalized compounds") and a (meth)acrylate-functionalized monomer containing 2 or more, preferably 2 or 3, acrylate and/or methacrylate groups per molecule.

The (meth)acrylate functionalized monomer may comprise a mono(meth)acrylate-functionalized monomer. The mono(meth)acrylate-functionalized monomer may advantageously function as a reactive diluent and reduce the viscosity of the composition of the invention.

Examples of suitable mono(meth)acrylate-functionalized monomers include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols and oligoglycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized monomers suitable for use in the polymerizable compositions of the present invention: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; ethylene glycol phenyl ether (meth)acrylate, diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

Preferred examples of mono(meth)acrylate-functionalized monomers suitable for use in the polymerizable compositions of the present invention include tetrahydrofurfuryl acrylate, dodecyl methacrylate, 2-(2-ethoxyethoxy)ethyl acrylate, ethylene glycol phenyl ether acrylate, isobornyl (meth)acrylate, methoxy polyethylene glycol monoacrylate, lauryl acrylate, alkoxylated phenol acrylate, and combinations thereof.

The (meth)acrylate functionalized monomer may comprise a (meth)acrylate-functionalized monomer containing two or more (meth)acrylate groups per molecule, for example 2, 3, 4, 5 or 6 (meth)acrylate groups per molecule.

Examples of suitable (meth)acrylate-functionalized monomers containing two or more (meth)acrylate groups per molecule include acrylate and methacrylate esters of polyhydric alcohols (organic compounds containing two or more, e.g., 2 to 6, hydroxyl groups per molecule). Specific examples of suitable polyhydric alcohols include C₂₋₂₀ alkylene glycols (glycols having a C₂₋₁₀ alkylene group may be preferred, in which the carbon chain may be branched; e.g., ethylene glycol, trimethylene glycol, 1,2-propylene glycol, 1,2-butanediol, 1,3-butanediol, 2,3-butanediol, tetramethylene glycol (1,4-butanediol), 1,5-pentanediol, 1,6-hexanediol, 1,8-octanediol, 1,9-nonanediol, 1,12-dodecanediol, cyclohexane-1,4-dimethanol, bisphenols, and hydrogenated bisphenols, as well as alkoxylated (e.g., ethoxylated and/or propoxylated) derivatives thereof), diethylene glycol, glycerin, alkoxylated glycerin, triethylene glycol, dipropylene glycol, tripropylene glycol, trimethylolpropane, alkoxylated trimethylolpropane, ditrimethylolpropane, alkoxylated ditrimethylolpropane, pentaerythritol, alkoxylated pentaerythritol, dipentaerythritol, alkoxylated dipentaerythritol, cyclohexanediol, alkoxylated cyclohexanediol, cyclohexanedimethanol, alkoxylated cyclohexanedimethanol, norbornene dimethanol, alkoxylated norbornene dimethanol, norbornane dimethanol, alkoxylated norbornane dimethanol, polyols containing an aromatic ring, cyclohexane-1,4-dimethanol ethylene oxide adducts, bis-phenol ethylene oxide adducts, hydrogenated bisphenol ethylene oxide adducts, bisphenol propylene oxide adducts, hydrogenated bisphenol propylene oxide adducts, cyclohexane-1,4-dimethanol propylene oxide adducts, sugar alcohols and alkoxylated sugar alcohols. Such polyhydric alcohols may be fully or partially esterified (with (meth)acrylic acid, (meth)acrylic anhydride, (meth)acryloyl chloride or the like), provided they contain at least two (meth)acrylate functional groups per molecule.

Exemplary (meth)acrylate-functionalized monomers containing two or more (meth)acrylate groups per molecule may include ethoxylated bisphenol A di(meth)acrylates; triethylene glycol di(meth)acrylate; ethylene glycol di(meth)acrylate; tetraethylene glycol di(meth)acrylate; polyethylene glycol di(meth)acrylates; 1,4-butanediol diacrylate; 1,4-butanediol dimethacrylate; diethylene glycol diacrylate; diethylene glycol dimethacrylate, 1,6-hexanediol diacrylate; 1,6-hexanediol dimethacrylate; neopentyl glycol diacrylate; neopentyl glycol di(meth)acrylate; polyethylene glycol (600) dimethacrylate (where 600 refers to the approximate number average molecular weight of the polyethylene glycol portion); polyethylene glycol (200) diacrylate; 1,12-dodecanediol dimethacrylate; tetraethylene glycol diacrylate; triethylene glycol diacrylate, 1,3-butylene glycol dimethacrylate, tripropylene glycol diacrylate, polybutadiene diacrylate; methyl pentanediol diacrylate; polyethylene glycol (400) diacrylate; ethoxylated₂ bisphenol A dimethacrylate; ethoxylated₃ bisphenol A dimethacrylate; ethoxylated₃ bisphenol A diacrylate; cyclohexane dimethanol dimethacrylate; cyclohexane dimethanol diacrylate; ethoxylatedio bisphenol A dimethacrylate (where the numeral following "ethoxylated" is the average number of oxyalkylene moieties per molecule); dipropylene glycol diacrylate; ethoxylated₄ bisphenol A dimethacrylate; ethoxylated₆ bisphenol A dimethacrylate; ethoxylated₈ bisphenol A dimethacrylate; alkoxylated hexanediol diacrylates; alkoxylated cyclohexane dimethanol diacrylate; dodecane diacrylate; ethoxylated₄ bisphenol A diacrylate; ethoxylatedio bisphenol A diacrylate; polyethylene glycol (400) dimethacrylate; polypropylene glycol (400) dimethacrylate; metallic diacrylates; modified metallic diacrylates; metallic dimethacrylates; polyethylene glycol (1000) dimethacrylate; methacrylated polybutadiene; propoxylated₂ neopentyl glycol diacrylate; ethoxylated₃₀ bisphenol A dimethacrylate; ethoxylated₃₀ bisphenol A diacrylate; alkoxylated neopentyl glycol diacrylates; polyethylene glycol dimethacrylates; 1,3-butylene glycol diacrylate; ethoxylated₂ bisphenol A dimethacrylate; dipropylene glycol diacrylate; ethoxylated₄ bisphenol A diacrylate; polyethylene glycol (600) diacrylate; polyethylene glycol (1000) dimethacrylate; tricyclodecane dimethanol diacrylate; propoxylated neopentyl glycol diacrylates such as propoxylated₂ neopentyl glycol diacrylate; diacrylates of alkoxylated aliphatic alcohols; trimethylolpropane trimethacrylate; trimethylolpropane triacrylate; tris (2-hydroxyethyl) isocyanurate triacrylate; ethoxylated₂₀ trimethylolpropane triacrylate; pentaerythritol triacrylate; ethoxylated₃ trimethylolpropane triacrylate; propoxylated₃ trimethylolpropane triacrylate; ethoxylated₆ trimethylolpropane triacrylate; propoxylated₆ trimethylolpropane triacrylate; ethoxylated₉ trimethylolpropane triacrylate; alkoxylated trifunctional acrylate esters; trifunctional methacrylate esters; trifunctional acrylate esters; propoxylated₃ glyceryl triacrylate; propoxylated_{5.5} glyceryl triacrylate; ethoxylated₁₅ trimethylolpropane triacrylate; trifunctional phosphoric acid esters; trifunctional acrylic acid esters; pentaerythritol tetraacrylate; di-trimethylolpropane tetraacrylate; ethoxylated₄ pentaerythritol tetraacrylate; pentaerythritol polyoxyethylene tetraacrylate; dipentaerythritol pentaacrylate; and pentaacrylate esters.

Preferred examples of (meth)acrylate-functionalized monomers containing two or more (meth)acrylate groups per molecule suitable for use in the polymerizable compositions of the present invention include poly(ethylene glycol) di(meth)acrylate, ethoxylated bisphenol A di(meth)acrylate, trimethylolpropane triacrylate, di(trimethylolpropane) tetraacrylate, pentaerythritol tetraacrylate, dipentaerythritol pentaacrylate, dipentaerythritol hexaacrylate, and combinations thereof. Dipentaerythritol hexaacrylate is particularly preferred.

The total amount of (meth)acrylate-functionalized monomer in the polymerizable composition may be from 0 to 99.5%, from 1 to 99%, from 2 to 90%, from 5 to 80%, from 10 to 70%, from 15 to 60%, from 20 to 50%, from 25 to 45% or from 30 to 40%, by weight based on the weight of the composition. In particular, the polymerizable composition may comprise from 50 to 99%, from 50 to 95%, from 50 to 90% from 50 to 85%, from 50 to 80% or from 50 to 75% by weight of (meth)acrylate-functionalized monomer based on the weight of the composition. Alternatively, the polymerizable composition may comprise from 1 to 50%, from 5 to 50%, from 10 to 50%, from 15 to 50%, from 20 to 50%, from 25 to 50% or from 30 to 50%, by weight of (meth)acrylate-functionalized monomer based on the weight of the composition.

The ethylenically unsaturated compound may comprise a (meth)acrylate-functionalized oligomer. The ethylenically unsaturated compound may comprise a mixture of (meth)acrylate-functionalized oligomers.

The (meth)acrylate-functionalized oligomer may be selected in order to enhance the flexibility, strength and/or modulus, among other attributes, of a cured polymer prepared using the polymerizable composition of the present invention.

The (meth)acrylate functionalized oligomer may have 1 to 18 (meth)acrylate groups, in particular 2 to 6 (meth)acrylate groups, more particularly 2, 3, 4, 5 or 6 acrylate groups.

The (meth)acrylate functionalized oligomer may have a number average molecular weight equal or more than 600 g/mol, in particular 800 to 15,000 g/mol, more particularly 1,000 to 5,000 g/mol.

In particular, the (meth)acrylate-functionalized oligomers may be selected from the group consisting of (meth)acrylate-functionalized urethane oligomers (sometimes also referred to as "urethane (meth)acrylate oligomers," "polyurethane (meth)acrylate oligomers" or "carbamate (meth)acrylate oligomers"), (meth)acrylate-functionalized epoxy oligomers (sometimes also referred to as "epoxy (meth)acrylate oligomers"), (meth)acrylate-functionalized polyether oligomers (sometimes also referred to as "polyether (meth)acrylate oligomers"), (meth)acrylate-functionalized polydiene oligomers (sometimes also referred to as "polydiene (meth)acrylate oligomers"), (meth)acrylate-functionalized polycarbonate oligomers (sometimes also referred to as "polycarbonate (meth)acrylate oligomers"), (meth)acrylate-functionalized polyester oligomers (sometimes also referred to as "polyester (meth)acrylate oligomers"), (meth)acrylate-functionalized acrylic oligomers (sometimes also referred to "acrylic (meth)acrylate oligomers") and mixtures thereof.

Preferably, the (meth)acrylate-functionalized oligomer comprises a (meth)acrylate-functionalized urethane oligomer, more preferably an acrylate-functionalized urethane oligomer.

Advantageously, the (meth)acrylate-functionalized oligomer comprises a (meth)acrylate-functionalized urethane oligomer having two (meth)acrylate groups, more preferably an acrylate-functionalized urethane oligomer having two acrylate groups.

Exemplary polyester (meth)acrylate oligomers include the reaction products of acrylic or methacrylic acid or mixtures or synthetic equivalents thereof with hydroxyl group-terminated polyester polyols. The reaction process may be conducted such that all or essentially all of the hydroxyl groups of the polyester polyol have been (meth)acrylated, particularly in cases where the polyester polyol is difunctional. The polyester polyols can be made by poly condensation reactions of polyhydroxyl functional components (in particular, diols) and polycarboxylic acid functional compounds (in particular, dicarboxylic acids and anhydrides). The polyhydroxyl functional and polycarboxylic acid functional components can each have linear, branched, cycloaliphatic or aromatic structures and can be used individually or as mixtures.

Examples of suitable epoxy (meth)acrylate oligomers include the reaction products of acrylic or methacrylic acid or mixtures thereof with an epoxy resin (polyglycidyl ether or ester). The epoxy resin may, in particular, by selected from bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-1,4-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate,3,4-epoxy-6-methylcyclohexy 1-3',4'-epoxy-6'-methylcyclohexanecarboxylate, methylenebis(3,4-epoxycyclohexane), dicyclopentadiene diepoxide, di(3,4-epoxycyclohexylmethyl) ether of ethylene glycol, ethylenebis(3, 4-epoxycyclohexanecarboxylate), 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, polyglycidyl ethers of a polyether polyol obtained by the addition of one or more alkylene oxides to an aliphatic polyhydric alcohol such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidized soybean oil, epoxybutylstearic acid, epoxyoctylstearic acid, epoxidized linseed oil, epoxidized polybutadiene, and the like.

Suitable polyether (meth)acrylate oligomers include, but are not limited to, the condensation reaction products of acrylic or methacrylic acid or synthetic equivalents or mixtures thereof with polyetherols which are polyether polyols (such as polyethylene glycol, polypropylene glycol or polytetramethylene glycol). Suitable polyetherols can be linear or branched substances containing ether bonds and terminal hydroxyl groups. Polyetherols can be prepared by ring opening polymerization of cyclic ethers such as tetrahydrofuran or alkylene oxides (e.g., ethylene oxide and/or propylene oxide) with a starter molecule. Suitable starter molecules include water, polyhydroxyl functional materials, polyester polyols and amines.

Polyurethane (meth)acrylate oligomers (sometimes also referred to as "urethane (meth)acrylate oligomers") suitable for use in the polymerizable compositions of the present invention include urethanes based on aliphatic, cycloaliphatic and/or aromatic polyester polyols and polyether polyols and aliphatic, cycloaliphatic and/or aromatic polyester diisocyanates and polyether diisocyanates capped with (meth)acrylate end-groups. Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

The polyurethane (meth)acrylate oligomers may be prepared by reacting aliphatic, cycloaliphatic and/or aromatic polyisocyanates (e.g., diisocyanate, triisocyanate) with OH group terminated polyester polyols, polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxyl-functionalized (meth)acrylates such as hydroxyethyl acrylate or hydroxyethyl methacrylate to provide terminal (meth)acrylate groups. For example, the polyurethane (meth)acrylate oligomers may contain two, three, four or more (meth)acrylate functional groups per molecule. Other orders of addition may also be practiced to prepare the polyurethane (meth)acrylate, as is known in the art. For example, the hydroxyl-functionalized (meth)acrylate may be first reacted with a polyisocyanate to obtain an isocyanate-functionalized (meth)acrylate, which may then be reacted with an OH group terminated polyester polyol, polyether polyol, polycarbonate polyol, polycaprolactone polyol, polydimethylsiloxane polyol, polybutadiene polyol, or a combination thereof. In yet another embodiment, a polyisocyanate may be first reacted with a polyol, including any of the aforementioned types of polyols, to obtain an isocyanate-functionalized polyol, which is thereafter reacted with a hydroxyl-functionalized (meth)acrylate to yield a polyurethane (meth)acrylate. Alternatively, all the components may be combined and reacted at the same time. Examples of suitable polyurethane (meth)acrylate are available from Arkema under references CN9001, CN9010, CN991, CN996, CN989.

Suitable acrylic (meth)acrylate oligomers include oligomers which may be described as substances having an oligomeric acrylic backbone which is functionalized with one or (meth)acrylate groups (which may be at a terminus of the oligomer and/or pendant to the acrylic backbone). The acrylic backbone may be a homopolymer, random copolymer or block copolymer comprised of repeating units of acrylic monomers. The acrylic monomers may be any monomeric (meth)acrylate such as C1-C6 alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxyl, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

Suitable polydiene (meth)acrylate oligomers include oligomers which may be described as substances having an oligomeric polydiene backbone which is functionalized with one or (meth)acrylate groups (which may be at a terminus of the oligomer and/or pendant to the polydiene backbone). The polydiene backbone may be a homopolymer, random copolymer or block copolymer comprised of repeating units of diene monomers. The diene monomers may be any monomeric conjugated diene such as 1,3-butadiene, isoprene, 1,3-pentadiene, 1,3-hexadiene, 2,3-dimethyl-1,3-butadiene, 2-ethyl-1,3-butadiene, 2-methyl-1,3-penta-diene, 3-methyl-1,3-pentadiene, 4-methyl-1,3-pentadiene, 2,4-hexadiene, and mixtures. Polydiene (meth)acrylate oligomers may be prepared using any procedures known in the art, such as by reacting a hydroxylated and/or epoxidized polydiene resin with (meth)acrylic acid.

The total amount of (meth)acrylate-functionalized oligomer in the polymerizable composition may be from 0 to 99.5%, from 1 to 99%, from 2 to 90%, from 5 to 80%, from 10 to 70%, from 15 to 60%, from 20 to 50%, from 25 to 45% or from 30 to 40%, by weight based on the weight of the composition. In particular, the polymerizable composition may comprise from 50 to 99%, from 50 to 95%, from 50 to 90% from 50 to 85%, from 50 to 80% or from 50 to 75% by weight of (meth)acrylate-functionalized oligomer based on the weight of the composition. Alternatively, the polymerizable composition may comprise from 1 to 50%, from 5 to 50%, from 10 to 50%, from 15 to 50%, from 20 to 50%, from 25 to 50% or from 30 to 50%, by weight of (meth)acrylate-functionalized oligomer based on the weight of the composition.

The ethylenically unsaturated compound may comprise an amine-modified acrylate. The ethylenically unsaturated compound may comprise a mixture of amine-modified acrylates.

An amine-modified acrylate is obtained by reacting an acrylate-functionalized compound with an amine-containing compound (aza-Michael addition). The amine-modified acrylate comprises at least one remaining acrylate group (i.e. an acrylate group that has not reacted with the amine-containing compound during the aza-Michael addition) and/or at least one (meth)acrylate group (which may not be reactive towards primary or secondary amines).

The acrylate-functionalized compound may be an acrylate-functionalized monomer and/or acrylate-functionalized oligomer as defined above.

The amine-containing compound comprises a primary or secondary amine group and optionally a tertiary amine group. The amine-containing compound may comprise more than one primary and/or secondary amine groups. The amine-containing compound may be selected from monoethanolamine (2-aminoethanol), 2-ethylhexylamine, octylamine, cyclohexylamine, sec-butylamine, isopropylamine, diethylamine, diethanolamine, dipropylamine, dibutylamine, 2-(methylamino)ethano-1,2-methoxyethylamine, bis(2-hydroxypropyl)amine, diisopropylamine, dipentylamine, dihexylamine, bis(2-ethylhexyl)amine, 1,2,3,4-tetrahydroisoquinoline, N-benzylmethylamine, morpholine, piperidine, dioctylamine, and di-cocoamine, dimethylaminopropylamine, dimethylaminopropylaminopropylamine, 1,4-bis(3 -aminopropyl)piperazine, 1,3-bis(aminomethyl)cyclohexane, 1,4-bis(3-aminopropyl)piperazine, aniline and an optionally substituted benzocaine (ethyl-4-aminobenzoate).

Examples of commercially available amine-modified acrylates include CN3705, CN3715, CN3755, CN381 and CN386, all available from Arkema. Polymeric or multi-amino versions are also suitable.

The polymerizable composition may comprise from 0% to 25%, in particular 2.5% to 20%, more particularly 5 to 15%, by weight of amine-modified acrylate based on the total weight of the polymerizable composition.

### Photoinitiator

The polymerizable composition of the invention may comprise a photoinitiator.

The photoinitiator may be a radical photoinitiator, in particular a radical photoinitiator having Norrish type I activity and/or Norrish type II activity, more particularly a radical photoinitiator having Norrish type I activity.

Non-limiting types of radical photoinitiators suitable for use in the polymerizable compositions of the present invention include, for example, benzoins, benzoin ethers, acetophenones, α-hydroxy acetophenones, benzyl, benzyl ketals, anthraquinones, phosphine oxides, acylphosphine oxides, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable radical photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

In particular, the photoinitiator may be a benzophenone (such as Speedcure^{®} BP, Speedcure^{®} 7005, Speedcure^{®} 7006), a thioxanthone (such as Speedcure^{®} 7010, Speedcure^{®} ITX), an α-hydroxy acetophenone, an acylphosphine oxide (such as Speedcure^{®} BPO, Speedcure^{®} TPO, Speedcure^{®} TPO-L). Preferably, the photoinitiator is Speedcure^{®} BPO.

The amount of photoinitiator in the polymerizable composition may be varied as may be appropriate depending on the photoinitiator(s) selected, the amounts and types of polymerizable species that are intended to be photopolymerized, the radiation source and the radiation conditions used, among other factors. Typically, however, the amount of photoinitiator in the polymerizable composition may be from 0 to 15%, from 0.05 to 10%, from 0.1 to 5% or from 0.5 to 5%, by weight based on the weight of the polymerizable composition.

### Amine synergist

The polymerizable composition of the present invention may comprise an amine synergist. The polymerizable composition may comprise a mixture of amine synergists.

Amine synergists may be introduced in the polymerizable composition of the present invention in order to act synergistically with Norrish Type II photoinitiators and/or to reduce oxygen inhibition. Amine synergists are typically tertiary amines. When used in conjunction with Norrish Type II photoinitiators, the tertiary amine provides an active hydrogen donor site for the excited triple state of the photoinitiator, thus producing a reactive alkyl-amino radical which can subsequently initiate polymerization. Tertiary amines are also able to convert unreactive peroxy species, formed by reaction between oxygen and free radicals, to reactive alkyl-amino radicals, thus reducing the effects of oxygen on curing.

When the polymerizable composition comprises an amine-modified acrylate monomer or oligomer as defined above, an amine synergist may not need to be added to the composition.

Examples of suitable amine synergists include low-molecular weight tertiary amines (i.e. having a molecular weight of less than 200 g/mol) such as triethanol amine, N-methyldiethanol amine. Other types of amine synergists are aminobenzoates, polymerizable aminobenzoates, polymeric aminobenzoates and mixtures thereof. Examples of aminobenzoates include ethyl 4-(dimethylamino)benzoate (EDB), pentyl 4-(dimethylamino)benzoate, 2-ethylhexyl 4-(dimethylamino)benzoate and 2-butoxyethyl 4-(dimethylamino)benzoate (BEDB).

The concentration of amine synergist in the polymerizable composition will vary depending on the type of compound that is used. Typically, however, the polymerizable composition is formulated to comprise from 0% to 25%, in particular 0.5% to 20%, more particularly 1 to 15%, by weight of amine synergist based on the total weight of the polymerizable composition.

### Other flame retardant

The polymerizable composition of the present invention may comprise a flame retardant other than component a). The polymerizable composition may comprise a mixture of flame retardants other than component a).

The other flame retardant may be an aromatic amine. Examples of suitable aromatic amines include melamine, melamine condensates (i.e. melam, melem or melon), melamine derivatives (such as melamine cyanurate, melamine borate) as well as the reaction products of melamine or melamine condensates with phosphoric acid or a condensed phosphoric acid (for example dimelamine phosphate, dimelamine pyrophosphate, melamine phosphate, melamine pyrophosphate, melamine polyphosphate, melam polyphosphate, melon polyphosphate and melem polyphosphate and mixed polysalts).

The other flame retardant may be a nitrogen-containing phosphate of the formula (NH₄)_{r'} H_{3-r'} PO4 or (NH₄PO₃)_{s'}, where r' is from 1 to 3 and s' is from 1 to 10 000. Examples thereof are ammonium hydrogenphosphate, ammonium dihydrogenphosphate or ammonium polyphosphate.

The other flame retardant may be a metallic or metalloid compound. The metallic or metalloid compound may include M-containing oxides, M-containing halides, M-containing alkoxides, M-containing hydroxides, M-containing nitrates, M-containing sulfates, M-containing sulfides, M-containing carboxylates, M-containing carbonates, M-containing borates, M-containing phosphates, M-containing stannates and combinations thereof, wherein M is a metal or a metalloid selected from the group consisting of Li, Na, K, Ce, Mg, Ca, Sr, Ba, Ti, Zr, V, Cr, Mo, W, Mn, Fe, Co, Ni, Pd, Cu, Zn, Cd, Hg, B, Al, Ga, In, Si, Ge, Sn, Pb, Sb and Bi, in particular Si, Mg, Zn, Al. Examples of such compounds include antimony oxide, salts and esters of orthosilicic acid and condensates thereof, silicas, silicates, zeolithes, glass powder, glassceramic powder, ceramic powder, magnesium hydroxide, hydrotalcites, magnesium carbonates, magnesium calcium carbonates, aluminum hydroxide, aluminum phosphate, boehmite, zinc oxide, zinc stannate, zinc hydroxystannate, zinc phosphate, zinc borate, zinc sulfides, bismuth oxide, molybdenum oxide, zinc borate, barium metaborates, calcium borate.

The other flame retardant may be selected from halogenated compounds. Examples of halogenated compounds are halogenated phosphates such as tris(2-chloropropyl) phosphate, tris(2,3-dibromopropyl)phosphate and tris(1,3-dichloropropyl)phosphate. Other examples of halogenated compounds are bromine- or chlorine-containing acid components or bromine- or chlorine-containing alcohol components such as hexachloroendomethylenetetrahydrophthalic acid, tetrabromophthalic acid, tetrabromophthalic anhydride and dibromoneopentyl glycol. Other examples of halogenated compounds are bromine- or chlorine-containing aromatic and aliphatic compounds such as brominated polystyrenes, polybromobenzyl acrylates, tetrabromobisphenol A and derivatives, polybrominated diphenyl ethers, ethylenebistetrabromophthalimide, brominated epoxy oligomers, polybrominated diphenylethanes, hexabromocyclododecane, chloroparaffins, and dodecachloropentacyclooctadecadiene.

The other flame retardant may be a graphite. Suitable graphites are known in the art and can include natural and synthetic graphites. Non-limiting examples of suitable graphites can include expandable graphite and/or exfoliated graphite. In certain embodiments, expandable graphite in the form of a solid or powder is intercalated with an acid such as, but not limited to, organic acids (e.g. acetic acid) and inorganic acids (e.g. H₂SO₄ and HNO₃).

The other flame retardant may be a phosphinic salt or a diphosphinic salt and/or polymers of these. Examples include phosphinic salts of the formula (XXXVI) and diphosphinic salts of the formula (XXXVII), , 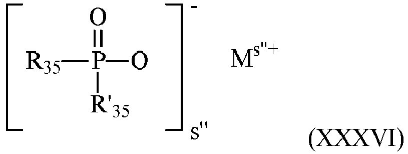 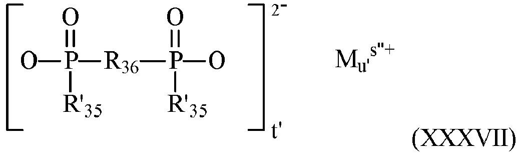 wherein
R₃₅ and R'₃₅ are independently selected from alkyl and aryl;
R₃₆ is a divalent linker as defined above for R32;
M is Mg, Ca, Al, Sb, Sn, Ge, Ti, Zn, Fe, Zr, Ce, Bi, Sr, Mn, Li, Na, K and/or a protonated nitrogen base;
s", t" and u' are independently from 1 to 4.

The other flame retardant may be a phosphate ester or an oligomeric phosphate ester. The phosphate ester may be according to formula (XXXVIII) and the oligomer phosphate ester may be according to formula (XXXIX): 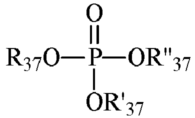 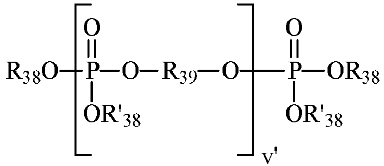 wherein
R₃₇, R'₃₇ and R"₃₇ are independently selected from alkyl, aryl and alkoxyalkyl;
or R₃₇ and R'₃₇ may, with the oxygen atoms to which they are attached form an optionally substituted ring having at least 5 ring atoms;
R₃₈ and R'₃₈ are independently selected from alkyl, aryl and alkoxyalkyl;
or when v' is 1, R₃₈ and R'₃₈ may, with the oxygen atoms to which they are attached, form an optionally substituted ring having at least 5 ring atoms;
R₃₉ is a divalent linker as defined above for R₃₂;
v' is 1 to 50.

Examples of monomeric phosphate esters are triphenyl phosphate, naphthyl diphenyl phosphate, dinaphthylphenyl phosphate, tricresyl phosphate, tributoxyethyl phosphate and diphenyl-2-ethylhexyl phosphate. Examples of oligomeric phosphate esters are resorcinol bis(diphenylphosphate), bisphenol A bis(diphenylphosphate), resorcinol bis(bis(2,6-dimethylphenyl)phosphate), hydroquinone bis(bis(2,6-dimethylphenyl)phosphate) and biphenol bis(bis(2,6-dimethylphenyl)phosphate).

The other flame retardant may be a phosphonate or a polymeric phosphonate.

The phosphate ester may be according to formula (XXXX) and the oligomer phosphate ester may be according to formula (XXXXI): 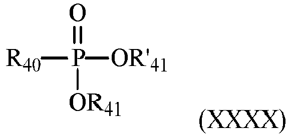 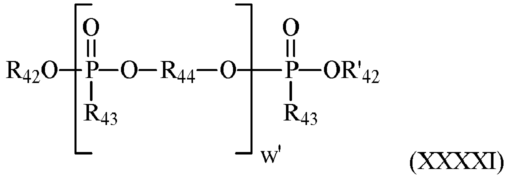 wherein
R₄₀ and R₄₃ are independently selected from alkyl and aryl;
R₄₁ and R'₄₁ are independently selected from alkyl, aryl and alkoxyalkyl;
or R₄₁ and R'₄₁ may, with the oxygen atoms to which they are attached form an optionally substituted ring having at least 5 ring atoms;
R₄₂ and R'₄₂ are independently selected from alkyl, aryl and alkoxyalkyl;
or when w' is 1, R₄₂ and R'₄₂ may, with the oxygen atoms to which they are attached, form an optionally substituted ring having at least 5 ring atoms;
R₄₄ is a divalent linker as defined above for R₃₂;
w' is 1 to 50.

Examples of such phosphonates include monomeric phosphonates such as dimethyl methylphosphonate, diethyl ethylphosphonate as well as oligomeric phosphonates such as ethylene bis(diethoxyphosphonate), ethylene bis(dimethoxyphosphonate), methylene bis(diethoxyphosphonate), methylene bis(dimethoxyphosphonate)

The amount of the other flame retardant material can vary widely. In certain embodiments, the polymerizable composition comprises up to 35 percent by weight based on the weight of the composition.

In a preferred embodiment, the polymerizable composition is substantially free of halogenated fire retardant and/or metallic or metalloid flame retardant.

### Additives

The polymerizable composition of the present invention may comprise an additive. The polymerizable composition may comprise a mixture of additives.

In particular, the additive may be selected from stabilizers (antioxidants, light blockers/absorbers, polymerization inhibitors) foam inhibitors, flow or leveling agents, colorants, dispersants, slip additives, fillers, chain transfer agents, thixotropic agents, matting agents, impact modifiers, waxes, mixtures thereof, and any other additives conventionally used in the coating, sealant, adhesive, molding, 3D printing or ink arts.

The polymerizable composition may comprise a stabilizer.

Stabilizers may be introduced in the polymerizable composition of the present invention in order to provide adequate storage stability and shelf life. Further, stabilizers may be used during the preparation of the polymerizable composition, to protect against unwanted reactions during processing of the ethylenically unsaturated components of the polymerizable composition. A stabilizer may be a compound or substance which retards or prevents reaction or curing of actinically-polymerizable functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). The stabilizer may, in particular be a free radical stabilizer (i.e. a stabilizer which functions by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized. Other stabilizers known in the art such as hydroquinone (HQ), 4-tert-butylcatechol (TBC), 3,5-di-tertiobutyl-4-hydroxytoluene (BHT), phenothiazine (PTZ), pyrogallol, phosphite compounds, triphenyl antimony and tin(II) salts.

The concentration of stabilizer in the polymerizable composition will vary depending upon the particular stabilizer or combination of stabilizers selected for use and also on the degree of stabilization desired and the susceptibility of components in the polymerizable compositions towards degradation in the absence of stabilizer. Typically, however, the polymerizable composition is formulated to comprise from 5 to 5000 ppm stabilizer. According to certain embodiments of the invention, the reaction mixture during each stage of the method employed to make the polymerizable composition contains at least some stabilizer, e.g., at least 10 ppm stabilizer.

The polymerizable composition may comprise a colorant. A colorant may be a dye, a pigment and mixtures thereof. The term "dye", as used herein means a colorant having a solubility of 10 mg/L or more in the medium in which it is introduced at 25°C. The term "pigment" is defined in DIN 55943, as a colorant that is practically insoluble in the application medium under the pertaining ambient conditions, hence having a solubility of less than 10 mg/L therein at 25°C. The term "C.I." is used as an abbreviation for Colour Index.

The polymerizable composition of the invention may comprise a dispersant. The dispersant may be used to disperse an insoluble material such as a pigment or filler in the polymerizable composition.

The dispersant may be a polymeric dispersant, a surfactant and mixtures thereof.

### Solvent

The polymerizable composition of the invention may be solvent-based or water-based. As used herein, the term "solvent" means a non-reactive organic solvent, i.e. a solvent comprising carbon and hydrogen atom that does not react when exposed to the actinic radiation used to cure the polymerizable compositions described herein.

The polymerizable compositions of the present invention may be formulated to be solvent-free. For example, the polymerizable compositions of the present invention may contain little or no solvent, e.g., less than 10% or less than 5% or less than 1% or even 0% by weight of solvent, based on the total weight of the polymerizable composition.

### Formulations

The polymerizable composition of the invention may be formulated as a one component or one part system. That is, the polymerizable composition may be cured directly, i.e. it is not combined with another component or second part prior to being cured.

In a first embodiment, the polymerizable composition of the invention may comprise:
a) a polymerizable flame retardant according to the invention;
b) an ethylenically unsaturated compound;
c) optionally a photoinitiator;
d) optionally an additive;
e) optionally a solvent.

The polymerizable composition of the first embodiment may comprise or consist essentially of:
a) 0.5 to 25%, in particular 1 to 20%, more particularly 2 to 10%, of polymerizable flame retardant;
b) 40 to 99.5%, in particular 50 to 95%, more particularly 60 to 90%, of ethylenically unsaturated compound;
c) 0 to 10%, in particular 0.5 to 6%, more particularly 1 to 3%, of photoinitiator;
d) 0 to 30% of additive;
e) 0 to 30% of solvent;
wherein the % are % by weight based on the weight of the composition.

Preferably, the polymerizable composition of the invention does not comprise any component other than components a)-e). Accordingly, the total weight of components a), b), c), d) and e) may represent 100% of the weight of the composition.

In preferred embodiments of the invention, the polymerizable composition is a liquid at 25°C. In various embodiments of the invention, the polymerizable compositions described herein are formulated to have a viscosity of less than 10,000 mPa.s, or less than 5,000 mPa.s, or less than 1,000 mPa.s, or less than 500 mPa.s, or less than 250 mPa.s, or even less than 100 mPa.s as measured at 25°C using a Brookfield viscometer, model DV-II, using a 27 spindle (with the spindle speed varying typically between 20 and 200 rpm, depending on viscosity). In advantageous embodiments of the invention, the viscosity of the polymerizable composition is from 10 to 10,000 mPa.s, or from 10 to 5,000 mPa.s, or from 10 to 1,000 mPa.s, or from 10 to 500 mPa.s, or from 10 to 250 mPa.s, or from 10 to 100 mPa.s at 25°C.

The polymerizable compositions described herein may be compositions that are to be subjected to curing by means of free radical polymerization. In particular embodiments, the polymerizable compositions may be photocured (i.e., cured by exposure to actinic radiation such as light, in particular visible, near-UV or UV light).

The polymerizable composition of the invention may be a coating composition, an adhesive composition, a sealant composition, a 3D-printing composition, a composite material composition or a molding composition.

End use applications for the polymerizable compositions include, but are not limited to, inks, paints, lacquers, varnishes, adhesives, sealants, additive manufacturing resins (such as 3D printing resins), molding resins, composite materials, electronic materials or packaging materials.

The polymerizable composition according to the invention may be used to obtain a cured product or a 3D printed article as described below.

### Methods / Uses

The process for the preparation of a cured product according to the invention comprises curing the polymerizable composition of the invention. In particular, the polymerizable composition may be cured by exposing the composition to radiation. More particularly, the polymerizable composition may be cured by exposing the composition to UV, near-UV and/or visible radiation.

Curing may be accelerated or facilitated by supplying energy to the polymerizable composition, such as by heating the polymerizable composition. Thus, the cured product may be deemed as the reaction product of the polymerizable composition, formed by curing. A polymerizable composition may be partially cured by exposure to actinic radiation, with further curing being achieved by heating the partially cured article. For example, a product formed from the polymerizable composition may be heated at a temperature of from 40°C to 120°C for a period of time of from 5 minutes to 12 hours.

Prior to curing, the polymerizable composition may be applied to at least a portion of a substrate. The composition may be applied in any known conventional manner, for example, by spraying, jetting, knife coating, roller coating, casting, drum coating, dipping, and the like and combinations thereof. Indirect application using a transfer process may also be used.

The substrate on which the polymerizable composition is applied and cured may be any kind of substrate. Suitable substrates are detailed below. When used as an adhesive, the polymerizable composition may be placed between two substrates and then cured, the cured composition thereby bonding the substrates together to provide an adhered article. Polymerizable compositions in accordance with the present invention may also be formed or cured in a bulk manner (e.g., the polymerizable composition may be cast into a suitable mold and then cured).

The present invention is further directed to a method for coating a substrate comprising applying to at least a portion of the substrate a polymerizable composition as described above.

The polymerizable composition of the present invention may be applied to a wide variety of substrates. Non-limiting examples of suitable substrates can include, but are not limited to, cellulosic material (such as paper, cardboard, wood, straw, or a material containing plant fibers such as bamboo, cotton, flax, hemp, jute, lyocell, modal, rayon, raffia, ramie or sisal), wool, fur, silk, leather, metal, natural and/or synthetic stone, ceramic, glass, brick, concrete, drywall (also referred to as plasterboard, wallboard, sheet rock, cement board or gypsum board), roofing shingles, asphalt, fiberglass, mineral wool, thermoplastic material, thermosetting material, polymer composite and combinations thereof. Metals can include but are not limited to aluminum, cold rolled steel, electrogalvanized steel, hot dipped galvanized steel, titanium and alloys. Thermoplastic material refers to any material that is capable of softening or fusing when heated and of solidifying (hardening) again when cooled. Non-limiting examples of suitable thermoplastic materials may include polyolefins, polyurethanes, polyesters, polyamides, polyureas, acrylics, and mixtures thereof. Thermosetting material refers to any material that becomes permanently rigid after being heated and/or cured. Non-limiting examples may include polyurethane polymers, polyester polymers, polyamide polymers, polyurea polymers, polycarbonate polymers, acrylic polymers, resins, copolymers thereof, and mixtures thereof. There is no restriction on the shape of the substrate. It can be a sheet, a film, a non-woven or woven fiber mat or a three dimensional object.

In non-limiting examples, the coating composition of the present invention can be applied to at least a portion of a building structure or an article of manufacture such as a vehicle. "Vehicle" includes but is not limited to civilian, commercial, and military land-, water-, and air-vehicles, for example, cars, trucks, boats, ships, submarines, airplanes, helicopters and tanks. The article of manufacture can be a building structure. "Building structure" includes but is not limited to at least a portion of a structure including residential, commercial and military structures, for example, roofs, floors, support beams, walls and the like.

The polymerizable flame retardant of the invention is particularly useful in a radiation curable composition, in particular in a UV or LED-curable composition.

The polymerizable flame retardant of the invention may be used in a polymerizable composition selected from a coating composition, an adhesive composition, a sealant composition, a 3D-printing composition, a composite material composition or a molding composition.

In particular, it may be used in intumescent paints and lacquers, in coatings applied on wood, textile and other cellulose-containing products, in adhesives for electronic applications or in fiber-reinforced composites.

The polymerizable flame retardant of the invention may be used to obtain a cured product with improved flame resistance and/or improved heat resistance and/or a reduced amount of extractables.

In particular, the cured product may be selected from an ink, a paint, a lacquer, a varnish, an adhesive, a sealant, 3D-printed article, a molded article, a composite material, an electronic material or a packaging material.

The improved flame resistance and/or improved heat resistance means any degree of improvement in flame resistance and/or heat resistance that is assessed in comparison with a cured product obtained without any flame retardant material. The flame resistance may be determined using the test method described herein.

The reduction in the amount of extractables may be assessed in comparison with a cured product obtained with a conventional flame retardant (i.e. a non-polymerizable phosphorus-based flame retardant). The extractables may be any component that migrates from the cured product. In particular, the extractables may be a flame retardant or a residue thereof.

### Items

The present invention may be as defined in the following Items:
Item 1. A polymerizable flame retardant comprising:
   - one or two (meth)acrylate-containing moieties;
   - one phosphorus-containing moiety comprising more than one phosphorus atom; and
   - optionally one or more urethane or ester bonds.
Item 2. The polymerizable flame retardant according to Item 1, wherein each (meth)acrylate-containing moiety independently bears 1 to 6 (meth)acrylate groups, in particular 1 to 3 (meth)acrylate groups, more particularly 1 (meth)acrylate group.
Item 3. The polymerizable flame retardant according to Item 1 or 2, wherein each (meth)acrylate-containing moiety independently comprises a moiety corresponding to formula (Ia): 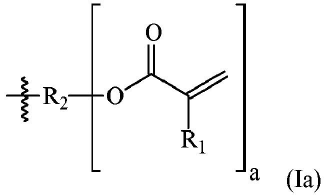 wherein
   Ri is H or methyl;
   R₂ is a (a+1)valent linker;
   a is 1 to 6; in particular 1 or 2, more particularly 1.
Item 4. The polymerizable flame retardant according to any one of Items 1 to 3, wherein each (meth)acrylate-containing moiety independently comprises a moiety corresponding to formula (Ib): 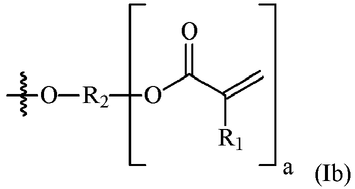 wherein R₁, R₂ and a are as defined in Item 3.
Item 5. The polymerizable flame retardant according to Items 3 or 4, wherein R₂ is a (a+1)valent linker selected from an aliphatic or aromatic hydrocarbon linker, a polyether linker, a polyester linker, a polycarbonate linker, a polyurethane linker, a polyorganosiloxane linker, a polycaprolactone linker, a polybutadiene linker, an isocyanurate linker, and combinations thereof; in particular R₂ is selected from an aliphatic or aromatic hydrocarbon linker, a polyether linker, a polyester linker and combinations thereof; more particularly R₂ is selected from an alkylene, an alkoxylated linker and a polyester linker.
Item 6. The polymerizable photoinitiator of any one of Items 3 to 5, wherein R₂ is selected from a trivalent linker corresponding to formula (II) or (III), a tetravalent linker corresponding to formula (IV) or (V), and an hexavalent linker corresponding to formula (VI): 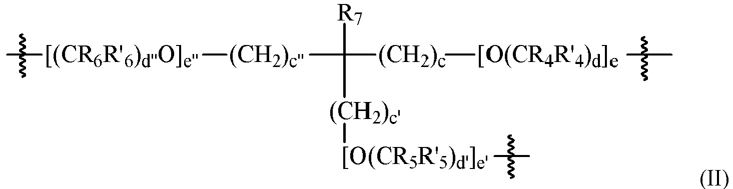 wherein
   R₄, R'₄, R₅, R'₅, R₆ and R'₆ are independently H or methyl;
   R₇ is selected from H, alkyl and alkoxy, in particular R₇ is alkyl;
   c, c' and c" are independently 0 to 2 with the proviso that at least 2 among c, c' and c" are not 0, in particular c, c' and c" are all 1 or c is 0 and c' and c" are 1;
   d, d' and d" are independently 2 to 4, in particular 2;
   e, e' and e" are independently 0 to 10, in particular 1 to 6; 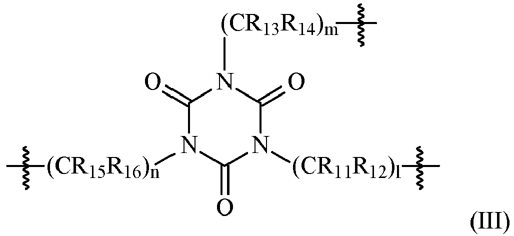
   wherein
   R₁₁, R₁₂, R₁₃, R₁₄, R₁₅ and R₁₆ are independently H or methyl, in particular H; 1, m and n are independently 1 to 6, in particular 2; 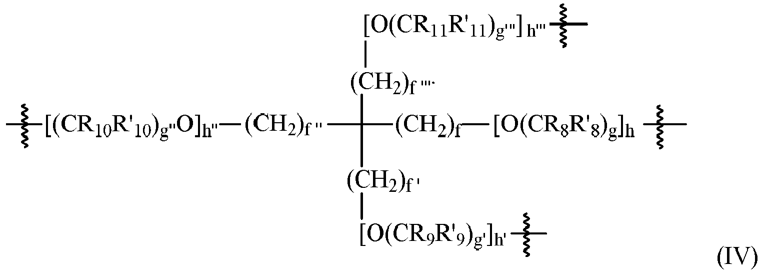 wherein
   R₈, R'₈, R₉, R'₉, R₁₀, R'₁₀, R₁₁ and R'₁₁ are independently H or methyl;
   f, f', f" and f" are independently 0 to 2 with the proviso that at least 3 among f, f', f" and f" are not 0, in particular f, f', f" and f''' are all 1,
   g, g', g" and g''' are independently 2 to 4, in particular 2;
   h, h', h" and h'" are independently 0 to 10, in particular 1 to 6; 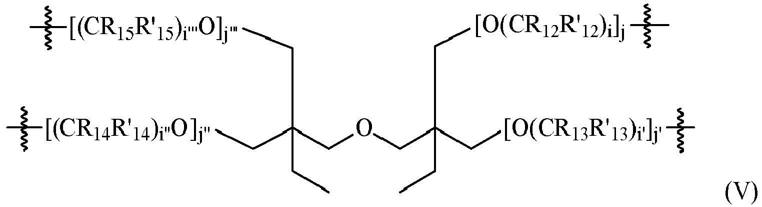
   wherein
   R₁₂, R'₁₂, R₁₃, R'₁₃, R₁₄, R'₁₄, R₁₅ and R'₁₅ are independently H or methyl; i, i', i" and i'" are independently 2 to 4, in particular 2;
   j, j', j" and j''' are independently 0 to 10, in particular 1 to 6; 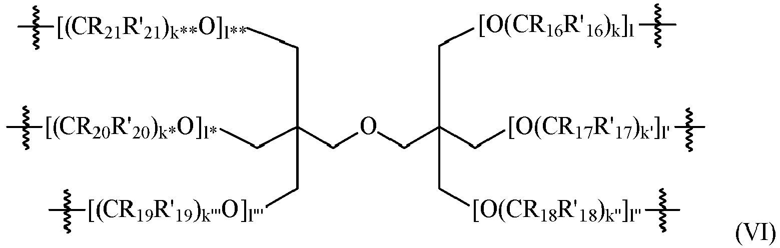
   wherein
   R₁₆, R'₁₆, R₁₇, R'₁₇, R₁₈, R'₁₈, R₁₉, R'₁₉, R₂₀, R'₂₀, R₂₁ and R'₂₁ are independently H or methyl; k, k', k", k''', k* and k** are independently 2 to 4, in particular 2;
   l, l', l", l''', l* and l** are independently 0 to 10, in particular 1 to 6.
Item 7. The polymerizable photoinitiator of any one of Items 3 to 5, wherein R₂ is a divalent linker selected from one of formula (VII) to (XI):

   -(CR₂₂R'₂₂)ₘ- (VII)

   - [(CR₂₃R'₂₃)ₙ-O]ₒ-(CR₂₃R'₂₃)ₙ- (VIII)

   -[(CR₂₄R'₂₄)ₚ-O]_{q}-(CR₂₅R'₂₅)ᵣ-[O-(CR₂₆R'₂₆)ₚ']_{q}'- (IX)

   -[(CR₂₇R'₂₇)ₛ-C(=O)O]ₜ-(CR₂₈R'₂₈)ᵤ-* (X)

   -[(CR₂₉R'₂₉)ᵥ-O-C(=O)-(CR₃₀R'₃₀)_{w}-C(=O)-O]ₓ-(CR₂₉R'₂₉)ᵥ- (XI)

   wherein
   R₂₂, R'₂₂, R₂₅, R'₂₅, R₂₉, R'₂₉, R₃₀ and R'₃₀ are independently H or alkyl;
   R₂₃, R'₂₃, R₂₄, R'₂₄, R₂₆, R'₂₆, R₂₇, R'₂₇, R₂₈ and R'₂₈ are independently H or methyl;
   m is 2 to 20;
   n, p and p' are independently 2 to 4;
   o is 1 to 20;
   q and q' are independently 0 to 20 with the proviso that at least one of q and q' is not 0 ;
   r is 2 to 20;
   s is 3 to 12;
   t is 1 to 20;
   u is 2 to 8;
   v is 2 to 20;
   w is 2 to 30;
   x is 1 to 20;
   the symbol * represents the point of attachment to the (meth)acrylate group;
   in particular, R₂ may be a divalent linker selected from an alkylene such as 1,2-ethanediyl, 1,2- or 1,3-propanediyl, 1,2-, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated derivative of the aforementioned alkylenes; an esterified derivative of the aforementioned alkylenes; a residue of a di-, tri-, tetra- or polyoxyalkylene without the OH groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol); and a residue of a polyester polyol without the OH groups.
Item 8. The polymerizable flame retardant according to any one of Items 1 to 7, wherein the phosphorus-containing moiety comprises more than one phosphorus-containing units, each unit comprising a phosphorus atom; in particular each phosphorus-containing unit independently comprises a phosphate moiety, a phosphonate moiety or a phosphinate moiety; more particularly each phosphorus-containing unit independently comprises a phosphate moiety or a phosphonate moiety corresponding to the following formula (XII): 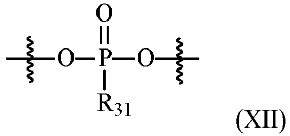 wherein R₃₁ is OH, alkyl, alkoxy, aryl, aryloxy, alkylaryl or alkylaryloxy, in particualar C1-C4 alkyl or C1-C4 alkoxy.
Item 9. The polymerizable flame retardant according to any one of Items 1 to 8, wherein the phosphorus-containing moiety comprises a moiety represented by formula (XIII) or (XIX): 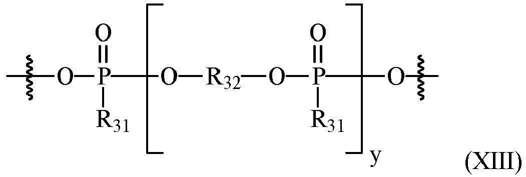 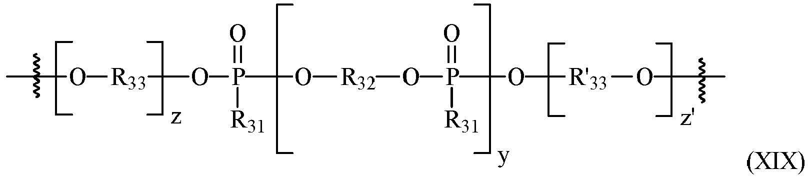 wherein
   each R₃₁ is independently OH, alkyl, alkoxy, aryl, aryloxy, alkylaryl or alkylaryloxy, in particular C1-C4 alkyl or C1-C4 alkoxy;
   each R₃₂ is independently alkylene optionally substituted by one or more phenyl groups, alkyleneoxyalkylene optionally substituted by one or more phenyl groups, poly(alkyleneoxyalkylene) optionally substituted by one or more phenyl groups, arylene or alkylarylene, in particular alkylene, alkyleneoxyalkylene or poly(alkyleneoxyalkylene); each R₃₃ and R'₃₃ is independently alkylene, in particular C2-C4 alkylene;
   y is 1 to 50, in particular 1 to 10;
   z and z' are independently 0 to 20 with the proviso that at least one of z and z' is not 0, in particular z and z' are independently 1 to 20.
Item 10. The polymerizable flame retardant according to Item 8 or 9, wherein R₃₂ is selected from one of formula (XIV) to (XVIII):

   -(CR₃₃R'₃₃)_{m'}- (XVI)

   -[(CR₃₄R'₃₄)ₙ'-O]_{o'}-(CR₃₄R'₃₄)ₙ'- (XV)

   -Ph- (XVI)

   -(CR₃₅R'₃₅)p"-Ph-(CR₃₆R'₃₆)_{q"}- (XVII)

   -Ph-(CR₃₇R'₃₇)_{r"}-Ph- (XVIII)

   wherein
   each R₃₃, R'₃₃, R₃₄ and R'₃₄ is independently selected from H, alkyl and phenyl;
   each R₃₅, R'₃₅, R₃₆, R'₃₆, R₃₇ and R'₃₇ is independently selected from H and alkyl;
   Ph is an optionally substituted phenylene;
   m' is 1 to 10;
   n' is 2 to 4;
   o' is 1 to 50;
   p" and q" are independently 0 to 10 with the proviso that at least one of p" and q" is not 0;
   r" is 0 to 10.
Item 11. The polymerizable flame retardant according to any one of Items 1 to 10, wherein the polymerizable flame retardant comprises at least one linker L connecting a (meth)acrylate-containing moiety to the phosphorus-containing moiety; in particular the polymerizable flame retardant comprises two linkers L, each linker L connecting a (meth)acrylate-containing moiety to one end of the phosphorus-containing moiety.
Item 12. The polymerizable flame retardant according to Item 11, wherein the linker L is a bond or linker corresponding to one of the following formulae (XX) or (XXI): 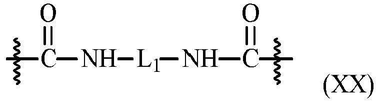 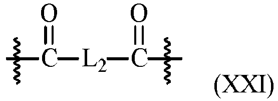 wherein
   Li is selected from an aliphatic linker, a cycloaliphatic linker, an aromatic linker and an araliphatic linker;
   L₂ is selected from an aliphatic linker, a cycloaliphatic linker, an aromatic linker and an araliphatic linker;
   in particular the linker L corresponds to formula (XX).
Item 13. The polymerizable flame retardant according to Item 12, wherein the linker Li is the residue of a diisocyanate of formula OCN-Li-NCO without the NCO groups or a derivative thereof; in particular the diisocyanate of formula OCN-Li-NCO is an aliphatic diisocyanate, a cycloaliphatic diisocyanate, an aromatic diisocyanate and an araliphatic diisocyanate, or a derivative thereof; more particularly the diisocyanate of formula OCN-Li-NCO is selected from 2,4- and 2,6-toluene diisocyanate (TDI), isophorone diisocyanate (IPDI - corresponding to 3-isocyanatomethyl-3,5,5-trimethylcyclohexylisocyanate), tetramethylene diisocyanate, pentamethylene diisocyanate (PDI), hexamethylene diisocyanate (HDI), trimethylhexamethylene diisocyanate (TMDI), 2,2'-, 2,4'- and 4,4'-diphenylmethane diisocyanate (MDI), 2,2'-, 2,4'- and 4,4'-dicyclohexylmethane diisocyanate (H12MDI), 3,3'-dimethyl-4,4'-biphenyl diisocyanate, 1,4-benzene diisocyanate, 1,5-naphtalene diisocyanate (NDI), 1,3- and 1,4-cyclohexane diisocyanate, 1-methyl-2,4-diisocyanatocyclohexane, 1-methyl-2,6-diisocyanatocyclohexane, dodecane diisocyanate, m-tetramethylene xylylene diisocyanate, 4,6-xylylene diisocyanate and derivatives thereof.
Item 14. The polymerizable flame retardant according to Item 12, wherein the linker L₂ is the residue of a diacid or diester of formula R₃₈OOC-L₂-COOR₃₈ without the COOR₃₈ groups wherein R₃₈ is H or an alkyl, or the linker L₂ corresponds to the moiety of a cyclic anhydride that forms a ring with the -C(=O)-O-C(=O)- group; in particular the diacid or diester of formula R₃₈OOC-L₂-COOR₃₈ is an aliphatic diacid or diester, a cycloaliphatic diacid or diester, an aromatic diacid or diester and an araliphatic diacid or diester; more particularly the diacid or diester of formula R₃₈OOC-L₂-COOR₃₈ is an aliphatic diacid or diester; even more particularly a saturated or unsaturated aliphatic diacid or diester.
Item 15. The polymerizable flame retardant according to any one of Items 1 to 14, wherein the polymerizable flame retardant corresponds to one of the structures of formula (XXII) to (XXV):

   Y-PHOS-ACR (XXII)

   ACR-PHOS-ACR (XXIII)

   Y-PHOS-L-ACR (XXIV)

   ACR-L-PHOS-L-ACR (XXV)

   wherein
   ACR is a (meth)acrylate-containing moiety as defined in any one of Items 2 to 7;
   PHOS is a phosphorus-containing moiety as defined in any one of Items 8 to 10;
   L is a linker as defined in any one of Items 11 to 14;
   Y is a terminal group.
Item 16. The polymerizable flame retardant according to Item 15, wherein Y is selected from H, alkyl and aryl, in particular Y is H or alkyl.
Item 17. The polymerizable flame retardant according to any one of Items 1 to 16, wherein the polymerizable flame retardant corresponds to one of the structures of formula (XXVI) to (XXVII): 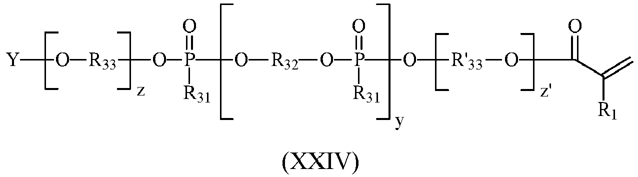 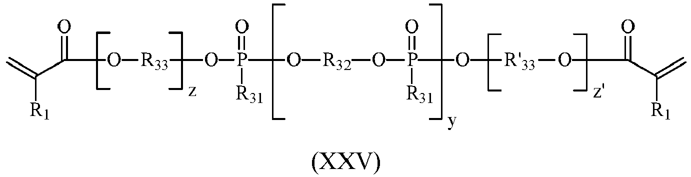 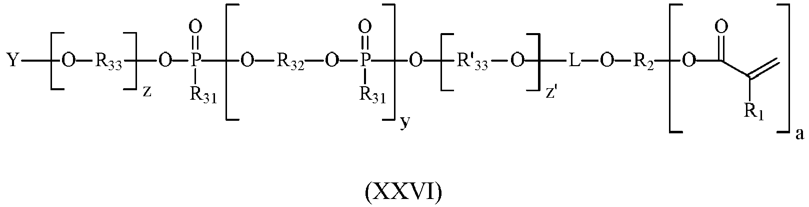 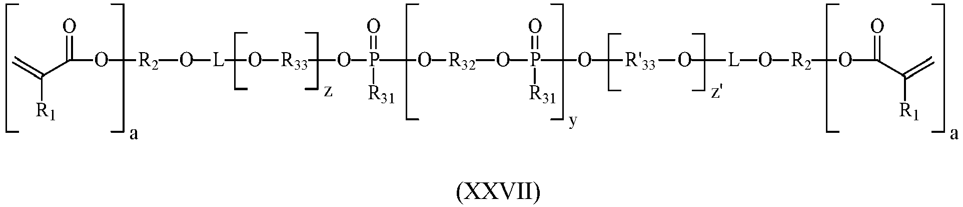 wherein
   Ri and a are as defined in Item 3;
   R₂ is as defined in any one of Items 3 to 7;
   R₃₁, R₃₃, R'₃₃, y, z and z' are as defined in Item 9;
   R₃₂ is as defined in Item 9 or 10;
   L is as defined in any one of Items 11 to 14;
   Y is as defined in Item 15 or 16.
Item 18. A process for the preparation of a polymerizable flame retardant as defined in any one of Items 1 to 17, wherein the polymerizable flame retardant is the reaction product of at least one phosphorus-containing compound, at least one (meth)acrylate-containing compound and optionally at least one OH-reactive compound.
Item 19. The process of Item 18, wherein the phosphorus-containing compound corresponds to formula (XXX), the (meth)acrylate-containing compound corresponds to formula (XXXI) or (XXXII) and the OH-reactive compound is selected from a diisocyanate corresponding to formula (XXXIII) or a derivative thereof, a diacid or a diester corresponding to formula (XXXIV) and a cyclic anhydride corresponding to formula (XXXV):

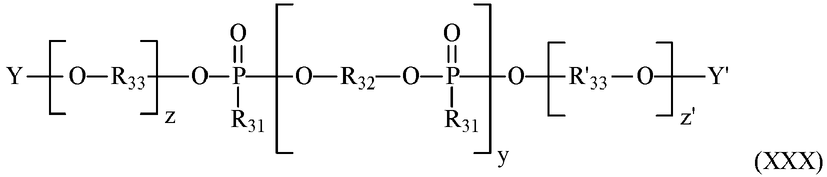

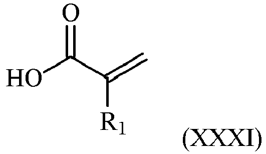

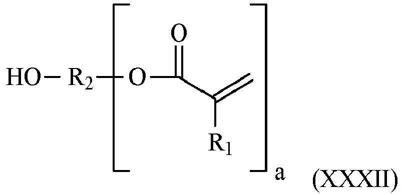

   OCN-L₁-NCO (XXXIII)

   R₃₄OOC-L₂-COOR₃₄ (XXXIV)

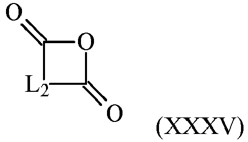

   wherein
   R₁ and a are as defined in Item 3;
   R₂ is as defined in any one of Items 3 to 7;
   R₃₁, R₃₃, R'₃₃, y, z and z' are as defined in Item 9;
   R₃₂ is as defined in Item 9 or 10;
   L₁ is as defined in Item 12 or 13;
   L₂ is as defined in Item 12 or 14;
   R₃₄ and R'₃₄ are independently H or alkyl;
   Y and Y' are independently selected from H, alkyl and aryl, with the proviso that at least one of Y and Y' is H.
Item 20. The process of Item 18 or 19, wherein the polymerizable flame retardant is the reaction product of at least one phosphorus-containing alcohol, at least one (meth)acrylate-containing alcohol and at least one OH-reactive compound selected from a diisocyanate, a diisocyanate derivative, a diacid, a diester and a cyclic anhydride, in particular the polymerizable flame retardant is obtained with a process comprising the following successive steps: reacting at least one OH-reactive compound with at least one (meth)acrylate-containing alcohol and then adding to the resulting product at least one phosphorus-containing alcohol.
Item 21. A polymerizable composition comprising:
   a) a polymerizable flame retardant according to any one of Items 1 to 17 or prepared according to the process of any one of Items 18 to 20;
   b) an ethylenically unsaturated compound other than a).
Item 22. The polymerizable composition of Item 21, wherein the ethylenically unsaturated compound is selected from a (meth)acrylate functionalized monomer, a (meth)acrylate functionalized oligomer, an amine-modified acrylate and mixtures thereof; in particular the ethylenically unsaturated compound comprises a (meth)acrylate functionalized monomer.
Item 23. The polymerizable composition of Item 21 or 22, wherein the polymerizable composition comprises:
   - from 10 to 95%, from 20 to 90%, from 30 to 85%, from 40 to 80%, from 50 to 75% or from 60 to 70% of component a);
   - from 5 to 90%, from 10 to 80%, from 15 to 70%, from 20 to 60%, from 25 to 50% or from 30 to 40% of component b);
   the % being % by weight based on the total weight of components a) and b).
Item 24. The polymerizable composition of any one of Items 21 to 23, wherein the polymerizable composition further comprises one or more compounds selected from a photoinitiator, an amine synergist, a flame retardant other than component a), an additive, a solvent.
Item 25. The polymerizable composition of any one of Items 21 to 24, wherein the polymerizable composition is a coating composition, an adhesive composition, a sealant composition, a 3D-printing composition, a composite material composition or a molding composition.
Item 26. A process for the preparation of a cured product, comprising curing the polymerizable composition according to any one of Items 21 to 25, in particular by exposing the polymerizable composition to radiation such as UV, near-UV and/or visible radiation.
Item 27. A use of the polymerizable flame retardant according to any one of Items 1 to 17 or prepared according to the process of any one of Items 18 to 20, in a radiation curable composition, in particular in a UV or LED-curable composition.
Item 28. A use of the polymerizable flame retardant according to any one of Items 1 to 17 or prepared according to the process of any one of Items 18 to 20, to obtain a cured product with improved flame resistance and/or improved heat resistance and/or reduced amount of extractables.
Item 29. A substrate on which the polymerizable composition according to any one of Items 21 to 25 has been applied, in particular the substrate is cellulosic material, wool, fur, silk, leather, metal, natural and/or synthetic stone, ceramic, glass, brick, concrete, drywall, roofing shingles, asphalt, fiberglass, mineral wool, thermoplastic material, thermosetting material, polymer composite and combinations thereof

Within this specification, embodiments have been described in a way which enables a clear and concise specification to be written, but it is intended and will be appreciated that embodiments may be variously combined or separated without departing from the invention. For example, it will be appreciated that all preferred features described herein are applicable to all aspects of the invention described herein.

Although the invention is illustrated and described herein with reference to specific embodiments, the invention is not intended to be limited to the details shown. Rather, various modifications may be made in the details within the scope and range of equivalents of the claims and without departing from the invention.

### EXAMPLES

### Materials

The following materials were used in the examples:

| Abbreviation | Chemical name | Supplier |
|---|---|---|
| IPDI | isophorone diisocyanate | Wanhua |
| HMDI | hexamethylene diisocyanate | Wanhua |
| HT100 | hexamethylene diisocyanate trimer | Wanhua |
| HEA | 2-hydroxyethyl acrylate | Arkema |
| Exolit^{®} OP 550 | polymeric ester of ethylene glycol and phosphoric acid with ethyl and hydroxyalkyl groups (CAS 184538-58-7) | Clariant |
| Irgacure^{®} 184 | 1-Hydroxycyclohexyl phenyl ketone (photoinitiator) | BASF |
| SpeedCure^{®} TPO | 2,4,6-trimethylbenzoyldiphenylphosphine oxide (photoinitiator) | Lambson |
| EAC | ethyl acetate | TCI |
| CN991 | aliphatic urethane diacrylate | Arkema |
| DPHA | dipentaerythritol hexaacrylate | Arkema |

### Example 1: Preparation of polymerizable flame retardant PRO 32351

33.3 parts of IPDI were added into a reaction container with stirring at 200 rpm and protected with dry air. 17.3 parts of HEA were gradually added into the reaction container to react with IPDI beginning at room temperature then allowed to exotherm to 60°C and maintained at 60°C for 30 min. 49.4 parts of Exolit^{®} OP 550 were gradually added into the reaction container at 60°C and allowed to exotherm to 80°C and maintained at 80°C for 1 hour. Aliquots were taken to check the NCO content hourly until the NCO content became below 0.1%. The reaction container was then cooled down to 60°C and the resin was transferred from the reaction container to a storage container.

### Example 2: Preparation of polymerizable flame retardant PRO 32403

37 parts of HMDI were added into a reaction container with stirring at 200 rpm and protected with dry air. 16.4 parts of HEA were gradually added into the reaction container to react with HMDI beginning at room temperature then allowed to exotherm to 60°C and maintained at 60°C for 30 min. 46.6 parts of Exolit^{®} OP 550 were gradually added into the reaction container at 60°C and allowed to exotherm to 80°C and maintained at 80°C for 1 hour. Aliquots were taken to check the NCO content hourly until the NCO content became below 0.1%. The reaction container was then cooled down to 60°C and the resin was transferred from the reaction container to a storage container.

### Example 3: Preparation of polymerizable flame retardant PRO32362

52.7 parts of HT100 were added into a reaction container with stirring at 200 rpm and protected with dry air. 23.3 parts of HEA were gradually added into the reaction container to react with IPDI beginning at room temperature then allowed to exotherm to 60°C and maintained at 60°C for 30 min. 24 parts of Exolit^{®} OP 550 were gradually added into the reaction container at 60°C and allowed to exotherm to 80°C and maintained at 80°C for 1 hour. Aliquots were taken to check the NCO content hourly until the NCO content became below 0.1%. The reaction container was then cooled down to 60°C and the resin was transferred from the reaction container to a storage container.

### Example 4: Flame retardancv testing and results

Polymerizable compositions were obtained by mixing the following ingredients (the amounts are in parts by weight)

| Component | Amount |
|---|---|
| Ethylenically unsaturated compound(s) (polymerizable flame retardant and optionally other monomers/oligomers) | 100 |
| Irgacure^{®} 184 | 4 |
| SpeedCure^{®} TPO | 1 |
| EAC | 20 |

Cured films were obtained with the following method:
Step 1 Scraping the polymerizable composition as a 300 µm layer on a glass plate
Step 2 Heating the coated glass plate at 60°C for 30 min
Step 3 Curing with Mercury lamp (UVA - 800∼1000 mJ/cm²) at a speed of 5 m/min
Step 4 Peeling off the dry film from glass plate
Step 5 Heating the dry film at 80°C for 24 hours
Step 6 Cutting the dry film into a strip (5 cm x 1 cm)

The flame retardant properties of the cured files was evaluated with the following test method:

| Test item | Test tool / apparatus | Criteria |
|---|---|---|
| Flame retardancy test | Flame temperature: 500∼600°C | Best to Worst: G0∼G5 |
| | Flame height: 20 mm | |
| | Burning time: 5 sec | |
| | Checking extent of damage | |

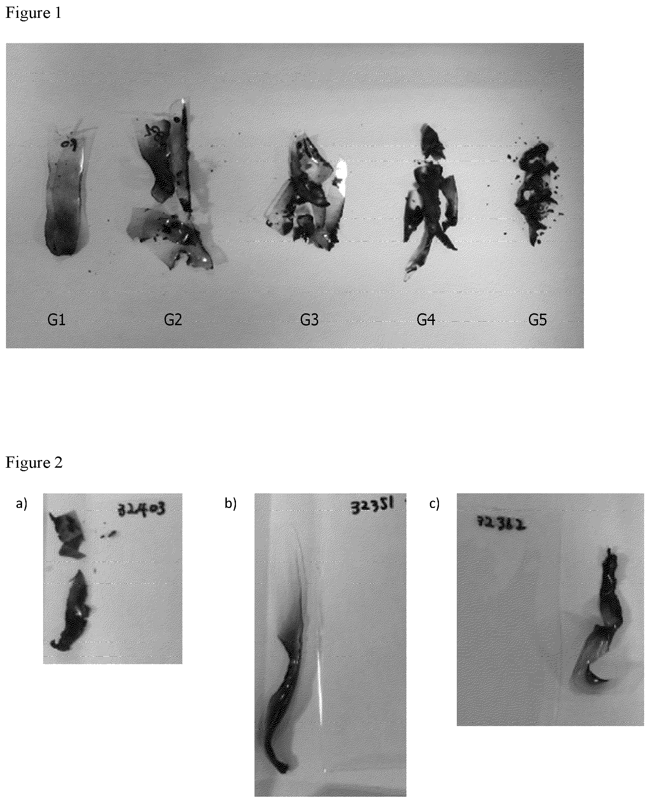

The flame retardancy grades G0, G1, G2, G3, G4 and G5 were assessed visually. Photographs corresponding to each grades G1 to G5 are shown in Figure 1.

The flame retardancy results of the cured films are given in the following table:

| Ethylenically unsaturated compounds (% by weight based on the total amount of ethylenically unsaturated compounds) | Flame retardancy grade |
|---|---|
| PRO32362 (100) | G1 |
| PRO32403 (100) | G2 |
| PRO32351 (100) | G1 |
| CN991 (100) | G5 |
| DPHA (100) | G4 |
| PRO32362:CN991 (70:30) | G3 |
| PRO32362:CN991 (60:40) | G3 |
| PRO32403:CN991 (70:30) | G3 |
| PRO32403:CN991 (60:40) | G3 |
| PRO32351:CN991 (70:30) | G2 |
| PRO32351:DPHA(70:30) | G1 |
| PRO32351:DPHA (60:40) | G1 |
| PRO32351:DPHA (50:50) | G2 |
| PRO32351:DPHA (40:60) | G2 |
| PRO32351:DPHA (30:70) | G3 |

As shown in Figure 2, the films obtained using the polymerizable flame retardant PRO32403 (Fig. 2a)) PRO32351 (Fig. 2b)) or PRO32362 (Fig. 2c)) as the only ethylenically unsaturated compound had good flame retardancy. They did not ignite easily, there was no flame dripping and only a small amount of white smoke was produced. The films obtained using conventional acrylates (CN991 or DPHA) as the only ethylenically unsaturated compound are much easier to ignite and produce a lot of black smoke. The introduction of 30% to 70% by weight of polymerizable flame retardant in a composition based on CN991 or DPHA improves the fire retardancy of the resulting film. PRO32351 performs better than PRO32403 and PRO32362. The best combination is obtained using DPHA as the other ethylenically unsaturated compound.

## Claims

1. A polymerizable flame retardant comprising:
- one or two (meth)acrylate-containing moieties;
- one phosphorus-containing moiety comprising more than one phosphorus atom; and
- optionally one or more urethane or ester bonds.

2. The polymerizable flame retardant according to claim 1, wherein each (meth)acrylate-containing moiety independently bears 1 to 6 (meth)acrylate groups, in particular 1 to 3 (meth)acrylate groups, more particularly 1 (meth)acrylate group.

3. The polymerizable flame retardant according to claim 1 or 2, wherein each (meth)acrylate-containing moiety independently comprises a moiety corresponding to formula (Ia): 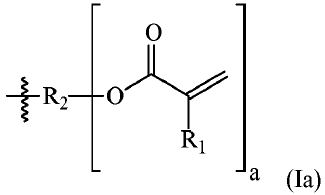 wherein
R₁ is H or methyl;
R₂ is a (a+1)valent linker;
a is 1 to 6; in particular 1 or 2, more particularly 1.

4. The polymerizable flame retardant according to claim 3, wherein R₂ is a (a+1)valent linker selected from an aliphatic or aromatic hydrocarbon linker, a polyether linker, a polyester linker, a polycarbonate linker, a polyurethane linker, a polyorganosiloxane linker, a polycaprolactone linker, a polybutadiene linker, an isocyanurate linker, and combinations thereof; in particular R₂ is selected from an aliphatic or aromatic hydrocarbon linker, a poly ether linker, a polyester linker and combinations thereof; more particularly R₂ is selected from an alkylene, an alkoxylated linker and a polyester linker.

5. The polymerizable flame retardant according to any one of claims 1 to 4, wherein the phosphorus-containing moiety comprises more than one phosphorus-containing units, each unit comprising a phosphorus atom; in particular each phosphorus-containing unit independently comprises a phosphate moiety, a phosphonate moiety or a phosphinate moiety; more particularly each phosphorus-containing unit independently comprises a phosphate moiety or a phosphonate moiety corresponding to the following formula (XII): 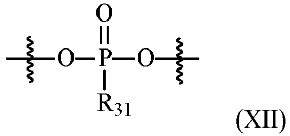 wherein R₃₁ is OH, alkyl, alkoxy, aryl, aryloxy, alkylaryl or alkylaryloxy, in particualar C1-C4 alkyl or C1-C4 alkoxy.

6. The polymerizable flame retardant according to any one of claims 1 to 5, wherein the phosphorus-containing moiety comprises a moiety represented by formula (XIII) or (XIX): 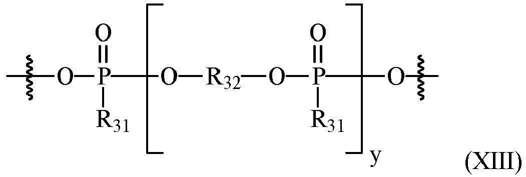 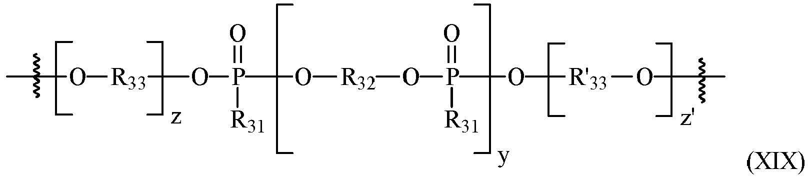 wherein
each R₃₁ is independently OH, alkyl, alkoxy, aryl, aryloxy, alkylaryl or alkylaryloxy, in particular C1-C4 alkyl or C1-C4 alkoxy;
each R₃₂ is independently alkylene optionally substituted by one or more phenyl groups, alkyleneoxyalkylene optionally substituted by one or more phenyl groups, poly(alkyleneoxyalkylene) optionally substituted by one or more phenyl groups, arylene or alkylarylene, in particular alkylene, alkyleneoxyalkylene or poly(alkyleneoxyalkylene);
each R₃₃ and R'₃₃ is independently alkylene, in particular C2-C4 alkylene;
y is 1 to 50, in particular 1 to 10;
z and z' are independently 0 to 20 with the proviso that at least one of z and z' is not 0, in particular z and z' are independently 1 to 20.

7. The polymerizable flame retardant according to any one of claims 1 to 6, wherein the polymerizable flame retardant comprises at least one linker L connecting a (meth)acrylate-containing moiety to the phosphorus-containing moiety; in particular the polymerizable flame retardant comprises two linkers L, each linker L connecting a (meth)acrylate-containing moiety to one end of the phosphorus-containing moiety.

8. The polymerizable flame retardant according to claim 7, wherein the linker L is a bond or linker corresponding to one of the following formulae (XX) or (XXI): 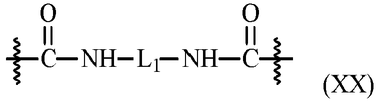 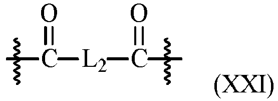 wherein
Li is selected from an aliphatic linker, a cycloaliphatic linker, an aromatic linker and an araliphatic linker;
L₂ is selected from an aliphatic linker, a cycloaliphatic linker, an aromatic linker and an araliphatic linker;
in particular the linker L corresponds to formula (XX).

9. The polymerizable flame retardant according to any one of claims 1 to 8, wherein the polymerizable flame retardant corresponds to one of the structures of formula (XXII) to (XXV):
Y-PHOS-ACR (XXII)
ACR-PHOS-ACR (XXIII)
Y-PHOS-L-ACR (XXIV)
ACR-L-PHOS-L-ACR (XXV)
wherein
ACR is a (meth)acrylate-containing moiety as defined in any one of claims 2 to 4;
PHOS is a phosphorus-containing moiety as defined in claim 5 or 6;
L is a linker as defined in claim 7 or 8;
Y is a terminal group, in particular Y is selected from H, alkyl and aryl, more particularly Y is H or alkyl.

10. The polymerizable flame retardant according to any one of claims 1 to 9, wherein the polymerizable flame retardant corresponds to one of the structures of formula (XXVI) to (XXVII): 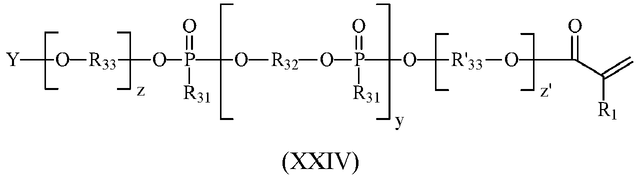 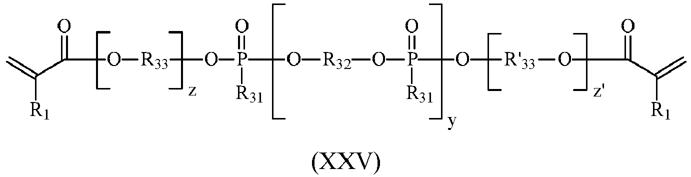 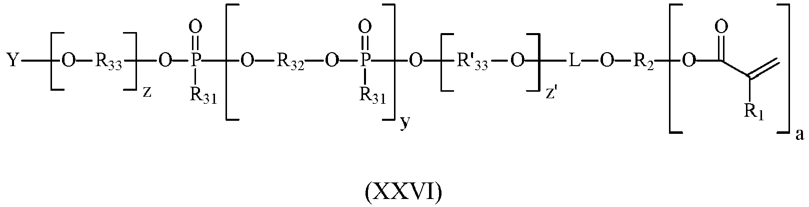 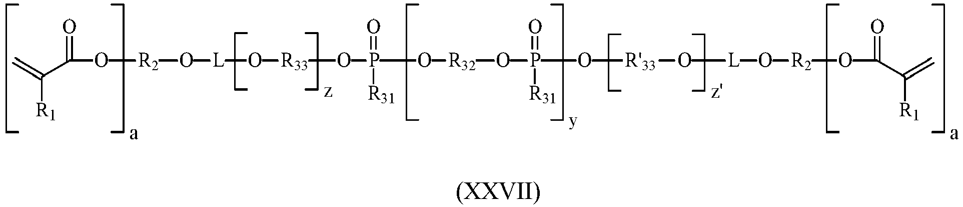 wherein
R₁ and a are as defined in claim 3;
R₂ is as defined in claim 3 or 4;
R₃₁, R₃₃, R'₃₃, y, z and z' are as defined in claim 6;
R₃₂ is as defined in claim 6;
L is as defined in claim 7 or 8;
Y is as defined in claim 9.

11. A process for the preparation of a polymerizable flame retardant as defined in any one of claims 1 to 10, wherein the polymerizable flame retardant is the reaction product of at least one phosphorus-containing compound, at least one (meth)acrylate-containing compound and optionally at least one OH-reactive compound.

12. The process of claim 11, wherein the phosphorus-containing compound corresponds to formula (XXX), the (meth)acrylate-containing compound corresponds to formula (XXXI) or (XXXII) and the OH-reactive compound is selected from a diisocyanate corresponding to formula (XXXIII) or a derivative thereof, a diacid or a diester corresponding to formula (XXXIV) and a cyclic anhydride corresponding to formula (XXXV): 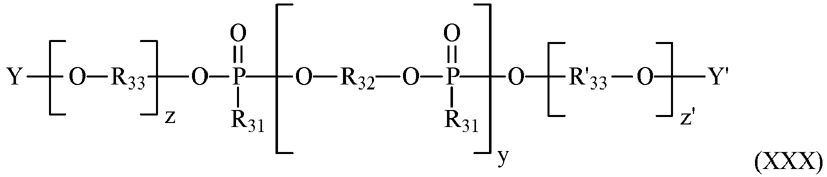 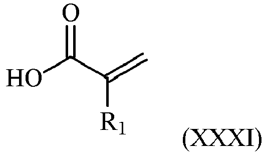 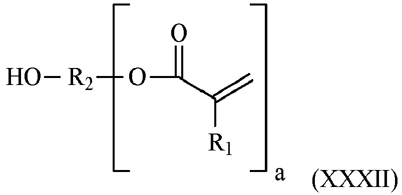 OCN-L₁-NCO (XXXIII)
R₃₄OOC-L₂-COOR₃₄ (XXXIV) 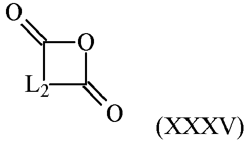
wherein
R₁ and a are as defined in claim 3;
R₂ is as defined in claim 3 or 4;
R₃₁, R₃₃, R'₃₃, y, z and z' are as defined in claim 6;
R₃₂ is as defined in claim 6;
L₁ is as defined in claim 8;
L₂ is as defined in claim 8;
R₃₄ and R'₃₄ are independently H or alkyl;
Y and Y' are independently selected from H, alkyl and aryl, with the proviso that at least one of Y and Y' is H.

13. A polymerizable composition comprising:
a) a polymerizable flame retardant according to any one of claims 1 to 10 or prepared according to the process of claim 11 or 12;
b) an ethylenically unsaturated compound other than a).

14. The polymerizable composition of claim 13, wherein the ethylenically unsaturated compound is selected from a (meth)acrylate functionalized monomer, a (meth)acrylate functionalized oligomer, an amine-modified acrylate and mixtures thereof; in particular the ethylenically unsaturated compound comprises a (meth)acrylate functionalized monomer.

15. The polymerizable composition of claim 13 or 14, wherein the polymerizable composition comprises:
- from 10 to 95%, from 20 to 90%, from 30 to 85%, from 40 to 80%, from 50 to 75% or from 60 to 70% of component a);
- from 5 to 90%, from 10 to 80%, from 15 to 70%, from 20 to 60%, from 25 to 50% or from 30 to 40% of component b);
the % being % by weight based on the total weight of components a) and b).

16. The polymerizable composition of any one of claims 13 to 15, wherein the polymerizable composition is a coating composition, an adhesive composition, a sealant composition, a 3D-printing composition, a composite material composition or a molding composition.

17. A process for the preparation of a cured product, comprising curing the polymerizable composition according to any one of claims 13 to 16, in particular by exposing the polymerizable composition to radiation such as UV, near-UV and/or visible radiation.

18. A use of the polymerizable flame retardant according to any one of claims 1 to 10 or prepared according to the process of claim 11 or 12, in a radiation curable composition, in particular in a UV or LED-curable composition.

19. A use of the polymerizable flame retardant according to any one of claims 1 to 10 or prepared according to the process of claim 11 or 12, to obtain a cured product with improved flame resistance and/or improved heat resistance and/or reduced amount of extractables.

20. A substrate on which the polymerizable composition according to any one of claims 13 to 16 has been applied, in particular the substrate is cellulosic material, wool, fur, silk, leather, metal, natural and/or synthetic stone, ceramic, glass, brick, concrete, drywall, roofing shingles, asphalt, fiberglass, mineral wool, thermoplastic material, thermosetting material, polymer composite and combinations thereof.
